# EUROPEAN PATENT APPLICATION

(11) **EP 4 543 031 A1**
(43) Date of publication of application: **23.04.2025**
(21) Application number: 23925053.3
(22) Date of filing: 06.12.2023
(51) Int. Cl.: H04N 23/57

(54) **PHOTOGRAPHING METHOD AND ELECTRONIC DEVICE**

(30) Priority: 27.02.2023 CN 202310216832
(71) Applicant: Honor Device Co., Ltd., Shenzhen, Guangdong 518040 (CN)
(72) Inventor: REN, Zeqiang, Shenzhen, Guangdong 518040 (CN)
(74) Representative: Epping - Hermann - Fischer
(86) International application number: PCT/CN2023/136755
(87) International publication number: WO 2024/179108

(57) **Abstract**

Embodiments of this application provide a photographing method and an electronic device. The electronic device may recognize a capturing intention of a user, and may decide, based on a time of manual capture, a highlight frame from image frames obtained within a short time before manual capture and image frames obtained within a short time after manual capture, for example, decide a highlight frame from image frames obtained within 1 second before manual capture and image frames obtained within 5 seconds after manual capture, to provide a highlight photo that meets an expectation of the user. This avoids a problem that it is difficult to capture the highlight photo that meets the expectation due to a reaction time delay of a person.

## Description

This application claims priority to Chinese Patent Application No. 202310216832.6, filed with the China National Intellectual Property Administration on February 27, 2023 and entitled "PHOTOGRAPHING METHOD AND ELECTRONIC DEVICE", which is incorporated herein by reference in its entirety.

### TECHNICAL FIELD

This application relates to the field of electronic technologies, and in particular to a photographing method and an electronic device.

### BACKGROUND

With development of electronic technologies, electronic devices such as a mobile phone and a tablet computer generally include a camera lens, for example, a front-facing camera lens, a rear-facing camera lens, and a wide-angle camera lens. Users can record wonderful images such as a splendid moment, a heart-warming scenario, and the like by using an electronic device that has a photographing capability.

### SUMMARY

According to a first aspect, this application provides a photographing method. The photographing method includes: An electronic device displays a photographing preview interface, where the photographing preview interface displays an image captured by a camera lens of the electronic device and a first thumbnail; the electronic device detects that a shutter button is pressed when detecting a first image frame; the electronic device detects, in the photographing preview interface, an operation of tapping a thumbnail of the first image frame; the electronic device obtains a second image frame based on an image frame in a first time range, where the image frame captured by the camera lens in the first time range includes the first image frame; and the first image frame is different from the second image frame; the electronic device stores the second image frame in a gallery; the electronic device exits displaying of the photographing preview interface; and the electronic device displays the photographing preview interface again, and displays a thumbnail of the second image frame in the photographing preview interface.

In the first aspect, the first image frame may be a preview frame corresponding to a time of manual capture, and the thumbnail of the first image frame may be a first manually-captured thumbnail in subsequent embodiments. The second image frame may be a manually-captured highlight frame in subsequent embodiments. The first time range may be, for example, 1 second before and 0.5 seconds after manual capture in subsequent embodiments. The thumbnail of the second image frame may be a second manually-captured thumbnail in subsequent embodiments.

With reference to the first aspect, in some embodiments, the method further includes: The electronic device stores the thumbnail of the second image frame in the gallery. In this way, a user may view the thumbnail of the second image frame in the gallery, and may view a full-size image of the second image frame by tapping the thumbnail.

With reference to the first aspect, in some embodiments, the method further includes: The electronic device detects, in the photographing preview interface, an operation of tapping the thumbnail of the first image frame, and displays a full-size image display interface of a gallery application, where the full-size image display interface displays the second image frame. That is, the user taps the thumbnail of a first image frame that feeds back rapidly and that is in the preview interface, to jump to the second image frame in the gallery. This is a jump in image content.

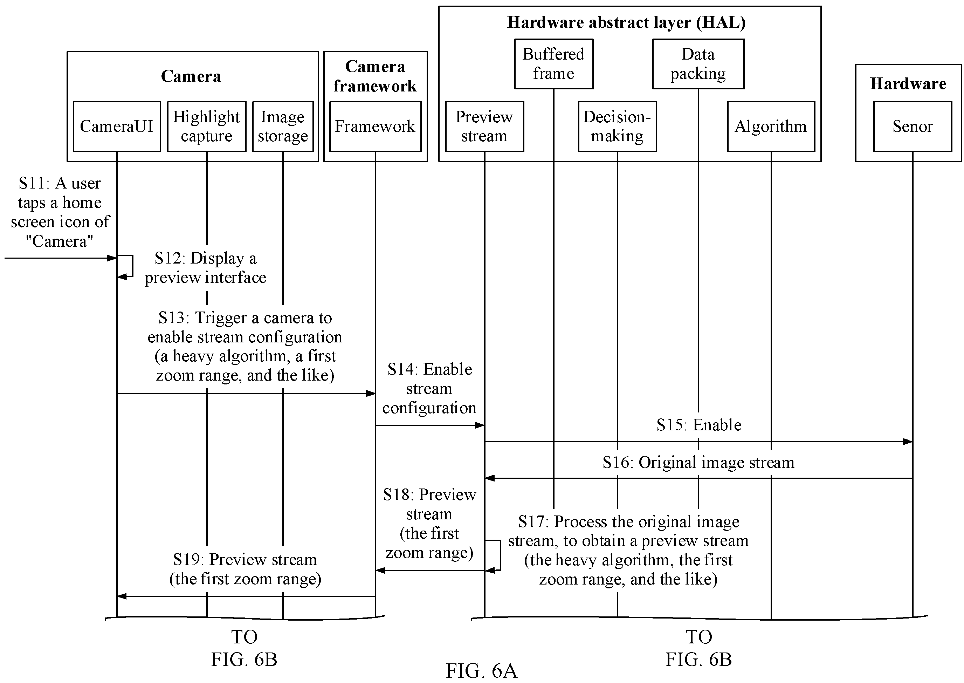

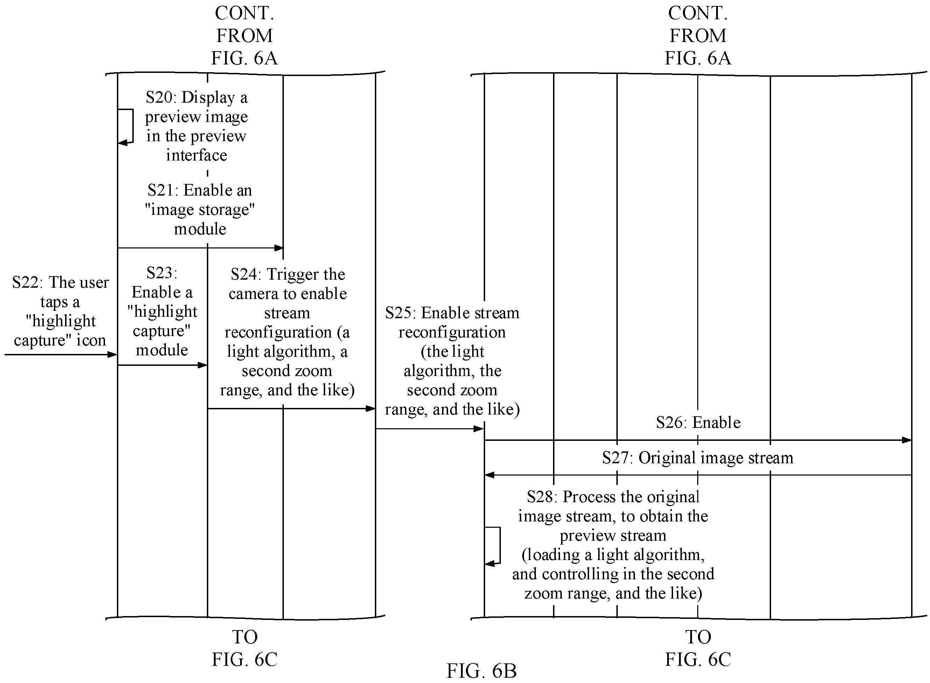

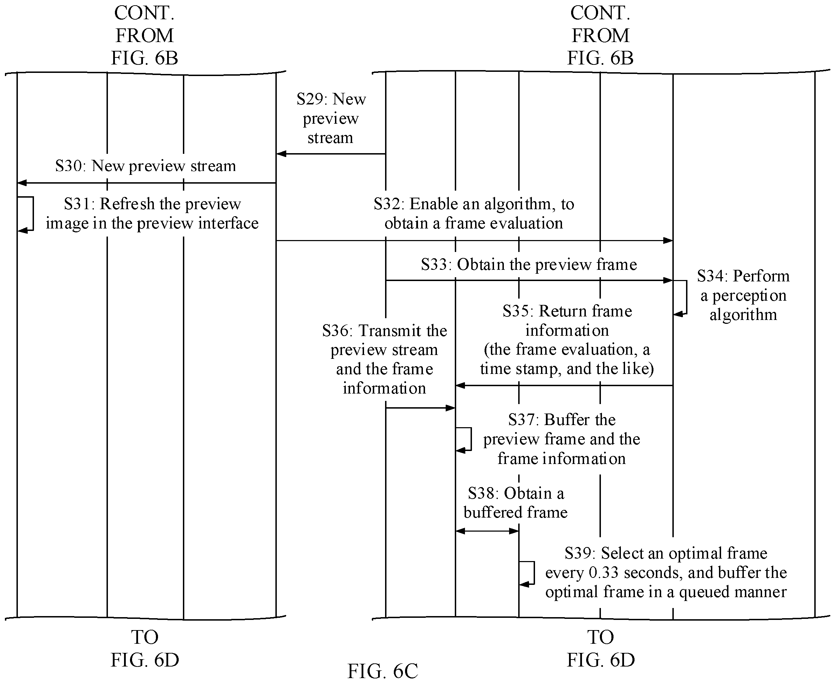

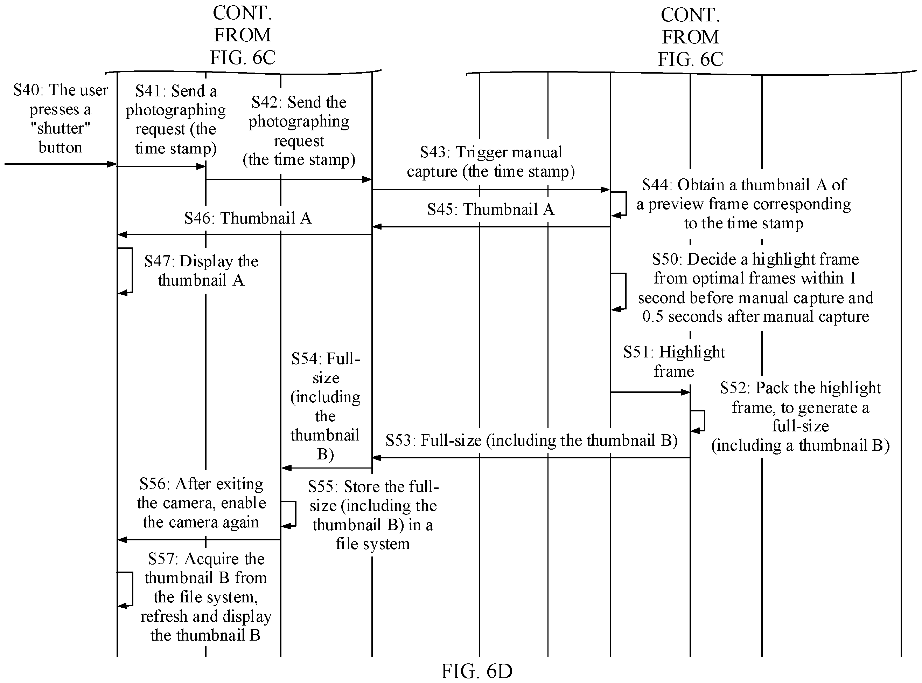

With reference to the first aspect, in some embodiments, the electronic device may include a hardware abstract layer HAL. That the electronic device obtains a second image frame based on an image frame in a first time range may include (refer to FIG. 6A to FIG. 6D and related embodiments):
A decision-making module in the HAL acquires a preview frame in a preview stream and frame information of the preview frame from a frame buffering module in the HAL, where the frame information includes a time stamp and a frame evaluation;
the decision-making module selects a local optimal frame once in a period of time, and buffers the local optimal frame in a queued manner, where the local optimal frame is a preview frame with a highest image evaluation in the period of time or a preview frame with an image evaluation higher than a first reference value; and
the decision-making module selects, based on a time of manual capture, a manually-captured highlight frame from a local optimal frame that is buffered in a queued manner and that is in the first time range, where the manually-captured highlight frame is a preview frame with a highest image evaluation in the first time range or a preview frame with an image evaluation higher than a second reference value.

With reference to the first aspect, in some embodiments, the method may further include (refer to FIG.6A to FIG. 6D and related embodiments):
An algorithm module in the HAL acquires a preview frame in preview from a preview stream module in the HAL, and performs image evaluation on the preview frame, to obtain a frame evaluation;
the algorithm module returns the frame evaluation of the preview frame to the frame buffering module in the HAL; and
the frame buffering module receives the preview frame in the preview stream transmitted by the preview stream module, and buffers the preview frame and the frame information of the preview frame.

With reference to the first aspect, in some embodiments, the electronic device may further include: a camera framework, a camera application, and the HAL; and that the electronic device stores the second image frame in a gallery includes (refer to FIG. 6A to FIG. 6D and related embodiments):
the decision-making module sends the second image frame to a data packing module in the HAL;
the data packing module performs packing processing on the second image frame, and returns a packed second image frame to the camera framework, where the packed second image frame includes the thumbnail of the second image frame;
the camera framework returns the packed second image frame to an image storage module in the camera application; and
the image storage module stores the packed second image frame.

With reference to the first aspect, in some embodiments, the electronic device may further include: a camera framework, a camera application, and the HAL; and that the electronic device refreshes and displays, a thumbnail of an image captured recently as a thumbnail of the manually-captured image may include (refer to FIG. 6A to FIG. 6D and related embodiments):
the decision-making module returns the thumbnail of the first image frame to the camera framework;
the camera framework returns the thumbnail of the first image frame to a UI module in the camera application; and
the UI module displays the thumbnail of the first image frame.

With reference to the first aspect, in some embodiments, before the electronic device detects a shutter button is pressed when detecting a first image frame, the method may further include: The electronic device enables a highlight capture function, where the enabling a highlight capture function includes: reconfiguring a preview stream process, where reconfiguring includes: initializing an algorithm of the preview stream to a heavy algorithm, and configuring a zoom range supported by the preview stream to a second zoom range from a first zoom range, where a maximum zoom ratio included in the second zoom range is lower than a maximum zoom ratio included in the first zoom range.

With reference to the first aspect, in some embodiments, the electronic device includes the hardware abstract layer HAL, the camera framework, and the camera application; and the reconfiguring a preview stream process includes (refer to FIG. 6A to FIG. 6D and related embodiments):
initializing, by the preview stream module in the HAL, the algorithm of the preview stream to a light algorithm, and changing the zoom range supported by the preview stream to the second zoom range;
returning, by the preview stream module, a reconfigured preview stream to the camera framework;
returning, by the camera framework, the reconfigured preview stream to the UI module in the camera application; and
displaying, by the UI module in the camera application, the reconfigured preview stream in the preview interface, and refreshing the preview interface.

With reference to the first aspect, in some embodiments, the refreshing the preview interface includes: disabling a function option that is supported by the heavy algorithm but not supported by the light algorithm, and refreshing the zoom range to the second zoom range from the first zoom range.

With reference to the first aspect, in some embodiments, a second highlight frame stored in the gallery includes marking information for marking a manually-captured highlight photo.

According to a second aspect, this application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the electronic device is enabled to perform the method described in the first aspect and any possible implementation of the first aspect.

According to a third aspect, an embodiment of this application provides a chip system, where the chip system is applied to an electronic device, the chip system includes one or more processors, and the processor is configured to invoke a computer instruction so that the electronic device performs the method described in any one of the first aspect or the possible implementations of the first aspect.

According to a fourth aspect, this application provides a computer-readable storage medium including instructions, and when the instructions are run on an electronic device, the electronic device is enabled to perform the method according to the first aspect and any possible implementation in the first aspect.

According to a fifth aspect, this application provides a computer program product including instructions, and when the computer program product is run on an electronic device, the electronic device is enabled to perform the method according to the first aspect and any possible implementation in the first aspect.

Understandably, the electronic device provided according to the second aspect, the chip system provided according to the third aspect, the computer storage medium provided according to the fourth aspect, and the computer program product provided according to the fifth aspect are all configured to perform the method provided in this application. Therefore, for beneficial effects that can be achieved therein, refer to the beneficial effects in the corresponding method, and details are not described herein again.

### BRIEF DESCRIPTION OF DRAWINGS

FIG. 1A to FIG. 1C are examples of a UI showing enabling "highlight capture";
FIG. 2A to FIG. 2H are examples of a UI showing that a user manually captures a photo;
FIG. 3A to FIG. 3J are schematic diagrams in which an electronic device manually captures a highlight photo in a "Video" mode;
FIG. 4 is an example of a hardware structure of an electronic device according to an embodiment of this application;
FIG. 5 is an example of a software architecture of an electronic device according to an embodiment of this application;
FIG. 6A to FIG. 6D are a schematic diagram of a photographing method according to an embodiment of this application; and
FIG. 7 is a schematic diagram of a decision-making mechanism for a manually-captured highlight frame according to an embodiment of this application.

### DESCRIPTION OF EMBODIMENTS

Terms used in the following embodiments of this application are only intended to describe particular embodiments, and are not intended to limit this application.

A highlight photo is an image captured by an electronic device via a camera lens at a splendid moment. The splendid moment may be a moment at which a photographed object is in an optimal state or action within a period of time. The state and the action are respectively to a still life photographing scenario and a non-scenery photographing scenario. In the still life photographing scenario, the splendid moment is a moment at which the photographed object is in a better relative still state in physical space and a still life object is clearly imaged without jitters and noise during camera lens imaging. In a non-still life photographing scenario, the splendid moment is a moment at which the photographed object has optimal action performance in physical space and a still life object is clearly imaged without jitters and noise during camera lens imaging.

For example, when a place of interest is photographed, the splendid moment is a moment at which a building is completely and clearly imaged on the electronic device via the camera lens without jitters and noise, and a photo that is formed with an image captured by the electronic device via the camera lens at the splendid moment is a highlight photo of the place of interest. When a long jumper is photographed, the splendid moment is a moment at which the jumper jumps forward after jumping and is completely and clearly imaged, without jitters and noise, and a photo that is formed with an image captured by the electronic device via the camera lens at the splendid moment is a highlight photo of the long jumper. When a close-up portrait is photographed, the splendid moment is a time at which the person opens eyes and smiles and is completely and clearly imaged, without jitters and noise, and a photo that is formed with an image captured by the electronic device via the camera lens at the splendid moment is a highlight photo of the person.

However, during photographing, due to a reaction time delay of the person, it is difficult for the user to take a highlight photo that meets an expectation.

For example, at a time T1, the user views a k^{th} frame of preview image in a preview interface of a camera application, and intends to capture the image frame. In this case, the user performs a photographing operation. However, due to the reaction time delay of the person and a time required for the electronic device to complete photographing, the image finally presented by the electronic device to the user is an image after the k^{th} frame of image, for example, a (k+n)^{th} frame of image. The frame of image does not meet a capturing expectation of the user.

Particularly, due to uncertainty of the reaction time delay of the person and device shaking caused by a capturing action, a ghost easily appears in a photo actually output by the electronic device to the user. This seriously affects image quality of a finally captured photo, and affects photographing experience of the user.

In view of this, embodiments of this application provide a photographing method, to avoid a problem that it is difficult to capture the highlight photo that meets the expectation due to a reaction time delay of a person.

The electronic device is an electronic device that has a camera lens and provides services of photographing and display, such as a smart phone, a tablet computer, a large-screen device, and the like. The photographing method provided in embodiments of this application may be embodied in the electronic device as a "manual capture" function.

**First, the "manual capture" function provided in embodiments of this application is described with reference to a user interface (user interface, UI) provided in the electronic device.**

### Enabling "highlight capture"

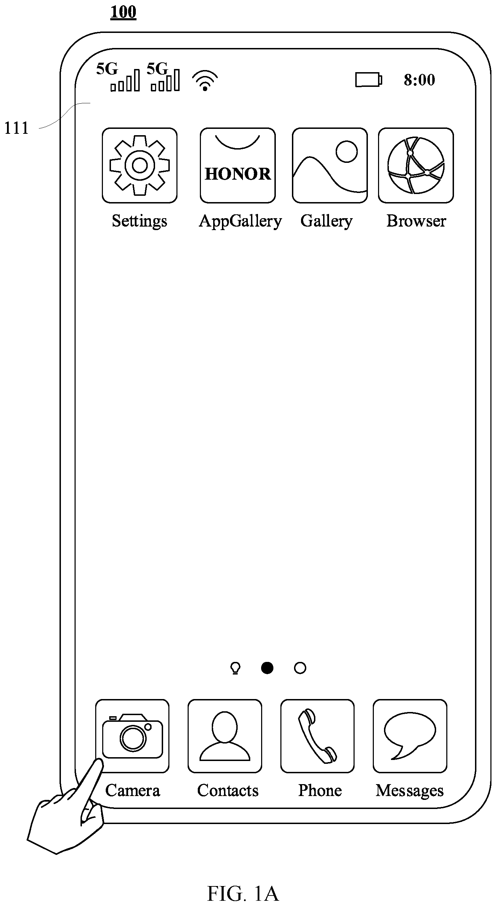

FIG. 1A to FIG. 1C are examples of a UI showing enabling "highlight capture".

FIG. 1A is an example of a home screen 111 of a system according to an embodiment of this application.

As shown in FIG. 1A, the home screen 111 shows a page with application icons. The page includes a plurality of application icons (for example, a settings application icon, an AppGallery application icon, a gallery application icon, a browser application icon, and the like.) A page indicator may be further displayed and included below the plurality of application icons, to indicate a location relationship between a currently displayed page and another page. A tray region is displayed below the page indicator. The tray region includes a plurality of tray icons, for example, a camera application icon, a contacts application icon, a phone application icon, and a messages application icon. The tray region remains displayed during page switching. In some embodiments, the page may include a plurality of application icons and a page indicator. The page indicator may not be a part of the page, and may exist alone. The tray icon is also optional. This is not limited in this embodiment of this application.

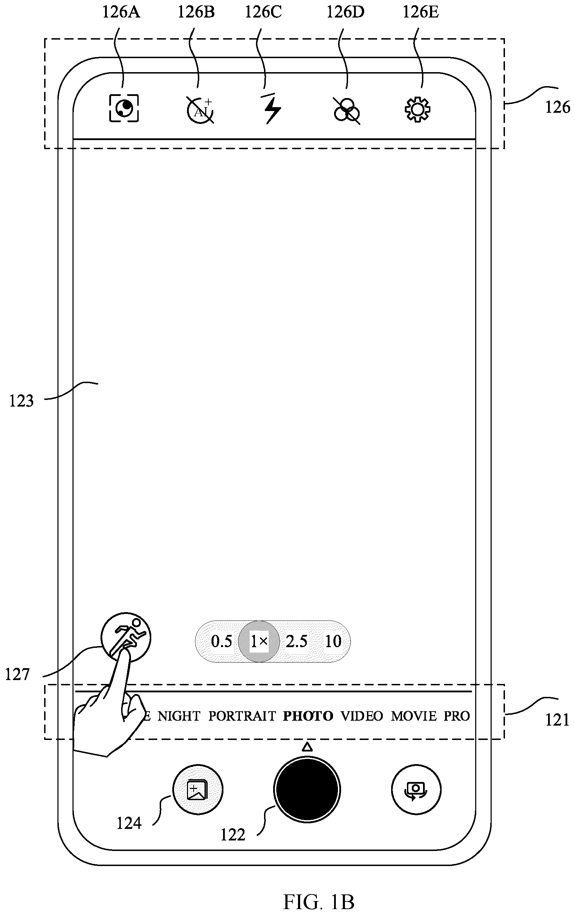

The electronic device may detect a user operation of enabling the camera application, for example, an operation of tapping a home screen icon of the camera application. In response to the operation, the electronic device may display a user interface shown in FIG. 1B.

FIG. 1B is an example of a preview interface according to an embodiment of this application.

As shown in FIG. 1B, the preview interface may include a mode bar 121, a photo option 122, a preview box 123, a playback control 124, a shortcut function region 126, and a "highlight capture" option 127.

The mode bar 121 may include a plurality of photo mode options, such as "Night", "Portrait", "Photo", and "Video". Different photo modes may provide photographing services with different effect for the user. The user may select any one of the plurality of photo modes to take a photo based on different needs. For example, "photo" may be a default photo mode, and used to take a photo. "Video" is used to record a video. The "Night" mode is applicable to a photographing scenario with dark light, for example, at night. The "Portrait" mode is applicable to a photographing scenario in which a photographing body is a person. The electronic device may detect a user operation of switching a mode, for example, an operation of leftward swiping/rightward swiping in the mode bar 121, and may change a current photo mode based on the operation. For example, when detecting that the mode bar 121 is dragged to slide leftward (a leftward swiping operation) and the icon stays at a "Portrait" option, the electronic device may switch to the "Portrait" mode. By default, the electronic device first enables the "Photo" mode.

The photo option 122 is used to trigger photographing. The electronic device may detect whether a user operation is performed on the photo option 122, for example, a tap operation. After detecting the user operation performed on the photo option 122, the electronic device may generate a photographing instruction. The electronic device may acquire, based on the photographing instruction, an image reported by the camera lens at a corresponding time stamp, and may store the image as a photo.

The preview box 123 may be used to display, in real time, the image reported by the camera lens. In different photo modes, the electronic device may process the image reported by the camera lens, to improve display effect of the image. For example, in the "portrait" mode, the electronic device may perform blurring on a background in the image reported by the camera lens, to highlight a portrait. In this case, the preview box 123 may display, in real time, an image obtained after being processed by different image processing algorithms corresponding to the different photographing modes, to enable the user to perceive photographing effect corresponding to the different photographing modes in real time.

The playback control 124 may be used to browse a thumbnail of a photographed photo/video. After detecting a user operation performed on the playback control 124, the electronic device may further display a highlight photo corresponding to the thumbnail.

The shortcut function region 126 may include an HDR function option 126A, an AI function option 126B, a flash function option 126C, a color mode function option 126D, a settings function option 126E, and the like. The HDR function option 126A may be used to trigger, when being enabled, the electronic device to fuse images using an HDR algorithm. An AI scenario recognition option 126B may be used to trigger, when being enabled, the electronic device to recognize a photographing scenario in a preview image, and the AI scenario recognition option 126B is disabled currently. The flash function option 126C may be used to trigger the electronic device to turn on or off a flash. The color mode function option 126D may be used to trigger the electronic device to process an image captured by the camera lens via a color filter. The settings function option 126E may be used to set a photographing parameter (for example, an image size, a storage format of the image, and the like) of the electronic device, and the like.

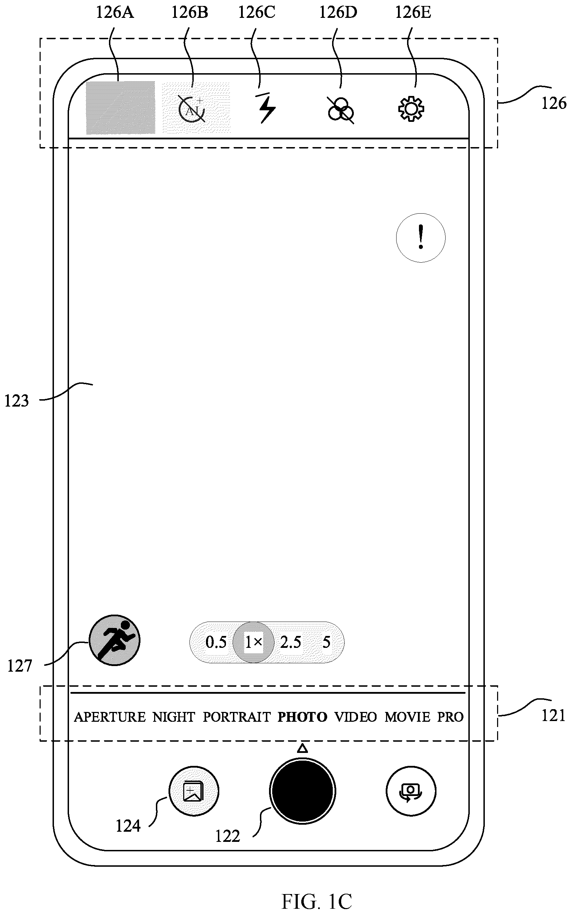

The "highlight capture" option 127 may be used for the user to enable/disable the "highlight capture" function. In the preview interface shown in FIG. 1B, "highlight capture" is disabled. In this case, the photo mode supported by the electronic device is an ordinary photo mode, and a zoom range supported by a preview stream is from 0.5x to 10x. In the preview interface shown in FIG. 1B, the electronic device may detect a user operation of enabling "highlight capture", for example, an operation of tapping the "highlight capture" option 127. In response to the operation, the electronic device may display the preview interface shown in FIG. 1C.

In the preview interface shown in FIG. 1C, the "highlight capture" option 127 is switched to a display form, for example, display of a deeper color, to indicate that the "highlight capture" function of the electronic device has been enabled. In the "highlight capture" mode, the zoom range supported by the preview stream becomes 0.5x to 5x. Compared to ordinary photographing, "highlight capture" is intended to obtain a highlight frame by performing image evaluation, and a perception algorithm used by "highlight capture" needs to perform frame filtering based on more image details and higher image quality. Therefore, a higher zoom ratio with a significant loss of pixels may not be supported. In addition, a function option conflicting with "highlight capture" is disabled, for example, the HDR function option 126A and the AI function option 126B become untouchable, for example, being grayed.

Not limited to a method for enabling the "highlight capture" function of the electronic device as shown in FIG. 1A to FIG. 1C, the user may further enable the "highlight capture" function of the electronic device in other ways, for example, quickly enabling the "highlight capture" function by pulling down the notification bar.

### Manual capture

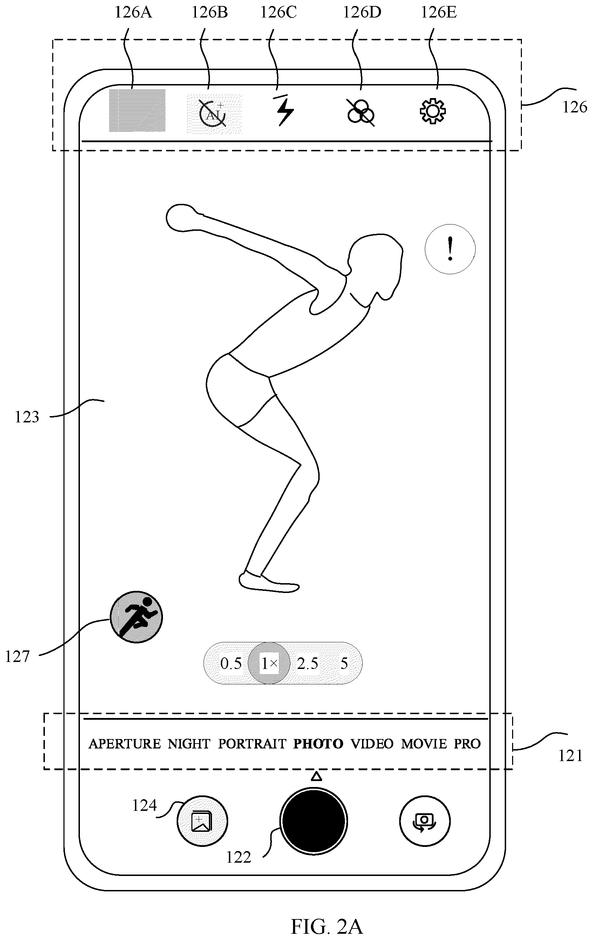

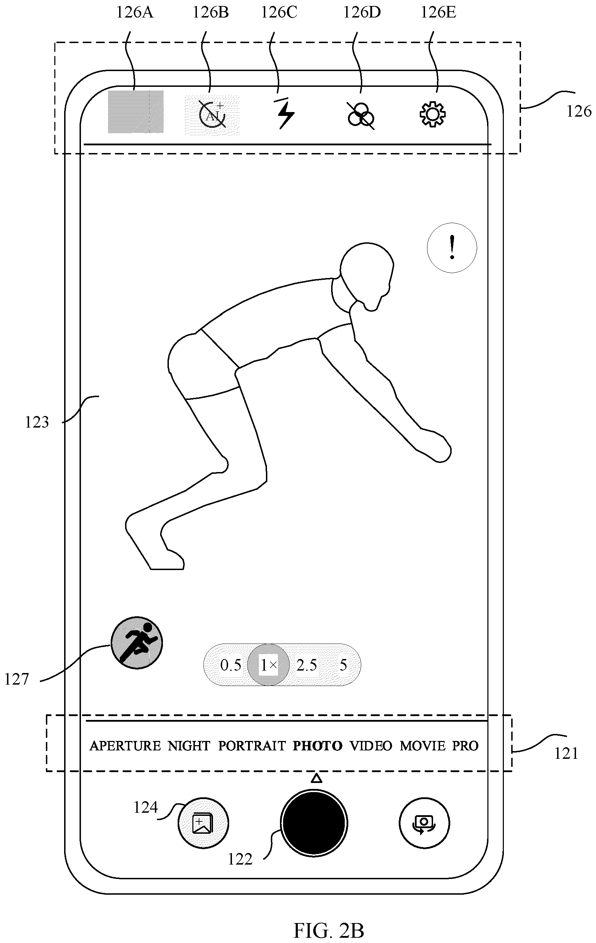

FIG. 2A to FIG. 2H are examples of a UI showing that a user manually captures a highlight photo. A series of preview images shown in FIG. 2A to FIG. 2E reflect that the user expects to manually capture a long jump action of an athlete. When the camera lens focuses on the athlete during long jumping, the electronic device may sequentially display images of the long jump action captured by the camera lens at different moments. For ease of subsequent description, preview frames shown in FIG. 2A to FIG. 2E may be numbered in chronological order as an (i-2)^{th} an (i-1)^{th} frame, an i^{th} frame, an (i+1)^{th} frame, and an (i+2)^{th} frame. The (i-1)^{th} frame is earlier than the i^{th} frame, but is not limited to 1 frame earlier.

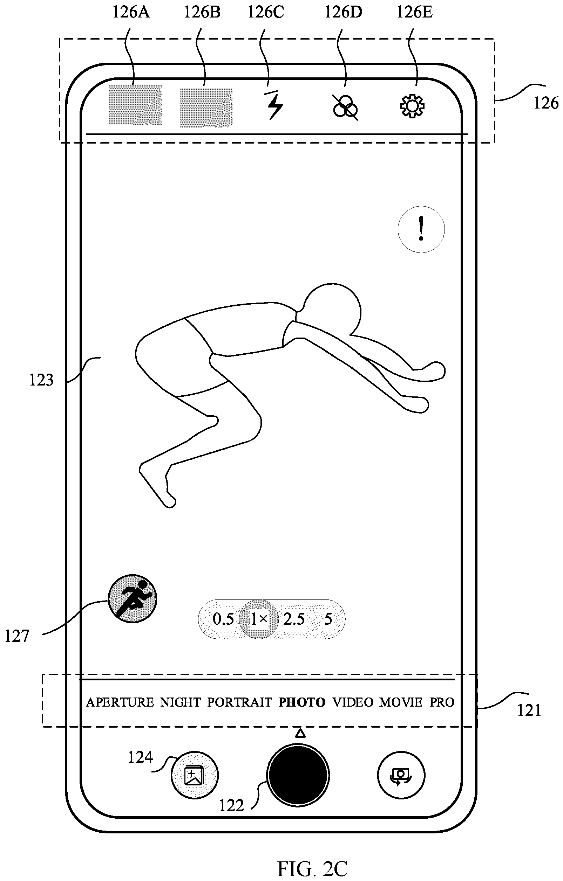

It is assumed that the preview image shown in FIG. 2C, for example, an image that the character jumps up to the highest point, is an image that the user expects to capture. In this case, the user taps the photographing option 122, to capture the image.

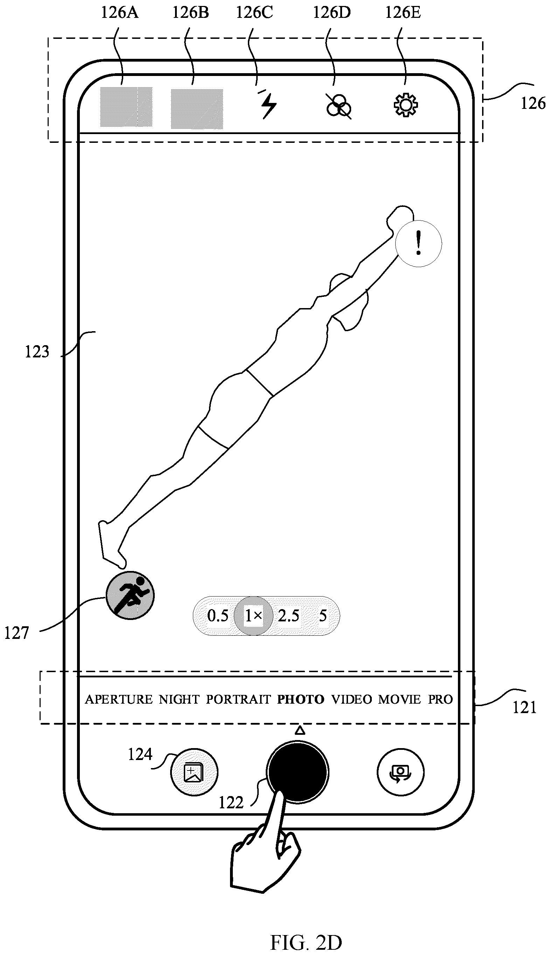

However, due to the reaction time delay of the person, at a time at which the user captures the image, an image displayed by the electronic device in the preview interface has been updated to the image shown in FIG. 2D, for example, an image of the body of the athlete in a flat state. Therefore, the electronic device detects the manual capture action of the user when displaying the preview frame shown in FIG. 2D. The preview frame shown in FIG. 2D is located after the preview frame shown in FIG. 2C. That is, a time at which the electronic device detects the manual capture action is later than a splendid moment that the user expects to capture. In the conventional technologies, the electronic device stores the preview frame shown in FIG. 2D as a photographed photo. However, the preview image shown in FIG. 2D is not the image that the user expects to capture.

In order to resolve the problem, in this embodiment of this application, the electronic device may recognize a capturing intention of the user, decide a manually-captured highlight frame based on a time of manual capture of the user, and store the manually-captured highlight frame as a highlight photo. This resolves a problem that it is difficult to capture a highlight photo meeting an expectation due to the reaction time delay of the person.

As shown in FIG. 2D, the electronic device may detect, when displaying the i^{th} frame of the preview image, a manual capture action, for example, tapping a shutter 122. In response to this, the electronic device may decide, based on the time of manual capture, a highlight frame, for example, the (i-1)^{th} frame of image shown in FIG. 2C, from preview frames captured at times within a short time period before and after manual capture, and may store the highlight frame as a manually-captured highlight photo.

Here, "times within a short time period before and after manual capture" may mean times earlier and/or later than the time of manual capture, with a small time interval. For example, within 1 second before manual capture and within five seconds after manual capture. A time within a short time period before manual capture may be limited based on a duration threshold, that is, the time is before manual capture but a time interval between the time and the time of manual capture is less than a first duration, for example, within 1 second before manual capture. A time within a short time period after manual capture may also be limited based on a duration threshold, that is, the time is after manual capture but a time interval between the time and the time of manual capture is less than a second duration, for example, within 0.5 seconds after manual capture. The first duration may also be equal to the second duration.

A splendid moment recognized by the electronic device based on a specific intelligent algorithm (the perception algorithm provided in this specification) is overlapped with or close to the splendid moment recognized by the user. Therefore, a selection range of the highlight frame is not far away from the time interval of manual capture. Particularly, the algorithm may be more close to consciousness of the user after being trained repeatedly, and the recognized splendid moment is more close to a splendid moment recognized by the user. Subsequent embodiments will describe how to decide the highlight frame using the algorithm, which is not described herein.

Values of the first duration and the second duration may be intelligently selected based on the photographing scenario. For example, in a photographing scenario in which images change quickly, the first duration and the second duration may be small, because a specific highlight image is not continuously captured. On the contrary, in a photographing scenario in which images change slowly, the first duration and the second duration may be large, because a specific highlight image may be continuously captured.

One implementation is that the manually-captured highlight frame stored as the highlight photo may be decided from the preview frames at the short time before manual capture (for example, within 1 second before manual capture) and the short time after manual capture (for example, within 0.5 seconds after manual capture). Subsequent embodiments will describe a specific implementation of decision-making, which is not described herein.

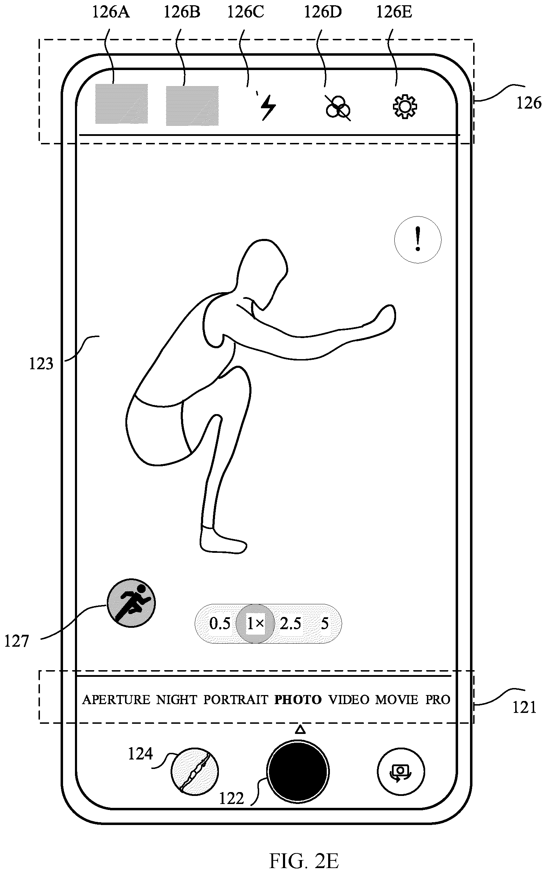

**In** addition, as shown in FIG. 2E, the electronic device may further update a thumbnail displayed on the playback control 124, to feed back manual capture of the user on the preview interface, thereby enabling the user to feel that capture occurs.

In order to quickly feed back a capture result to the user and optimize the capture result, the thumbnail may be updated in two steps. Step 1: Generate a first manually-captured thumbnail based on the preview frame during manual capture, and refresh and display the first manually-captured thumbnail. Step 2: Generate a second manually-captured thumbnail based on the decided manually-captured highlight frame, add the second manually-captured thumbnail to a full-size image of the manually-captured highlight frame, and refresh and display, after the camera application is enabled again, the second manually-captured thumbnail in the preview interface. The manually-captured highlight frame is comprehensively decided from the preview frames captured at the short time before manual capture (for example, within 1 second before manual capture) and the short time after manual capture (for example, within 0.5 seconds after manual capture).

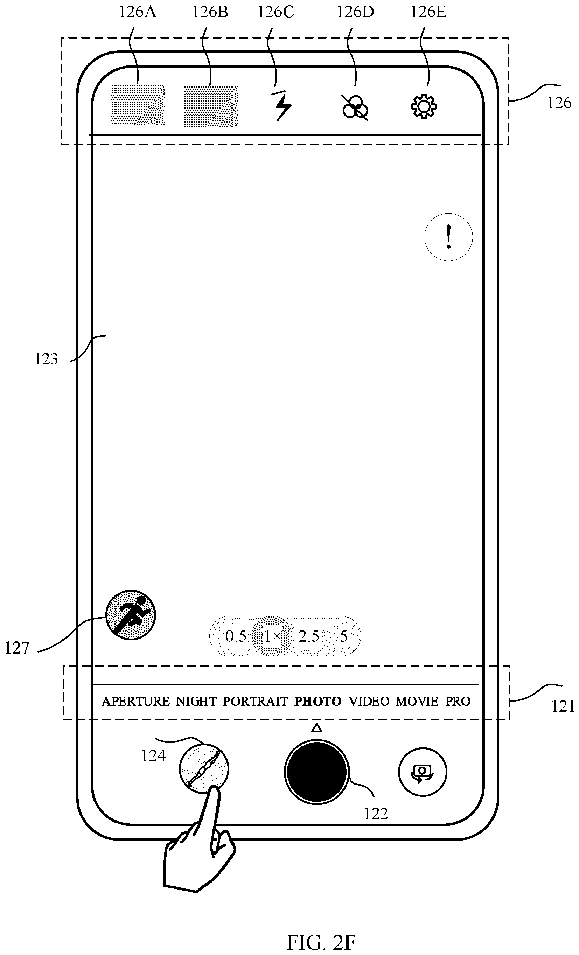

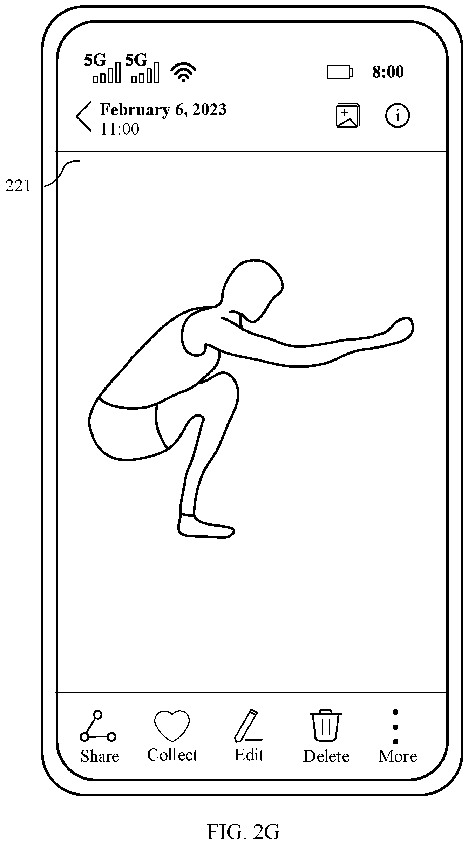

Subsequently, the user may view the manually-captured highlight photo by jumping in the gallery via the first manually-captured thumbnail. That is, when the first manually-captured thumbnail jumps to the manually-captured highlight photo, the user may feel the jump in image content. As shown in FIG. 2F, the electronic device may detect that the user taps the first manually-captured thumbnail (for example, a thumbnail of the body of the athlete in the flat state), and in response to this, the electronic device may open an interface shown in FIG. 2G. The interface is a full-size image display interface of the gallery, and displays the manually-captured highlight photo (for example, a thumbnail that the athlete jumps to a highest point).

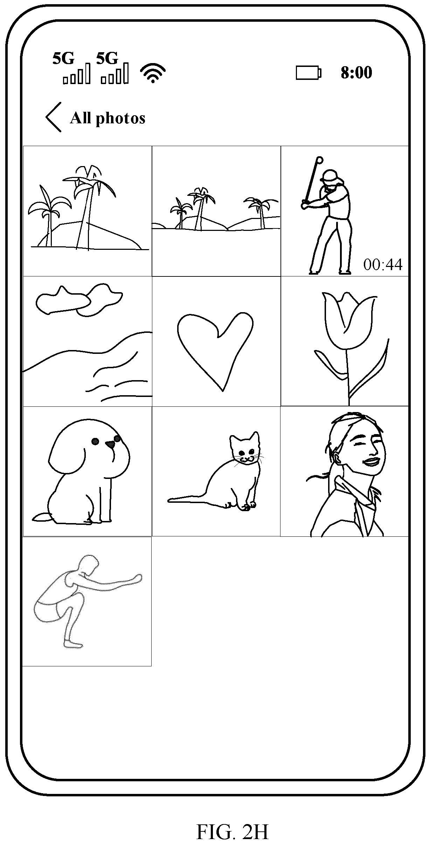

In addition, after the user exits the camera application and enables the camera application again, the electronic device may display the thumbnail in the preview interface as the second manually-captured thumbnail, instead of the first manually-captured thumbnail. Not limited to this, the user may also first open the user interface of the gallery shown in FIG. 2H. The thumbnail displayed is the second manually-captured thumbnail, instead of the first manually-captured thumbnail. The thumbnail in the gallery is extracted from a full-size image in the gallery.

**Not limited to the above preview scenario, the user may also implement manual capture in a video recording scenario.**

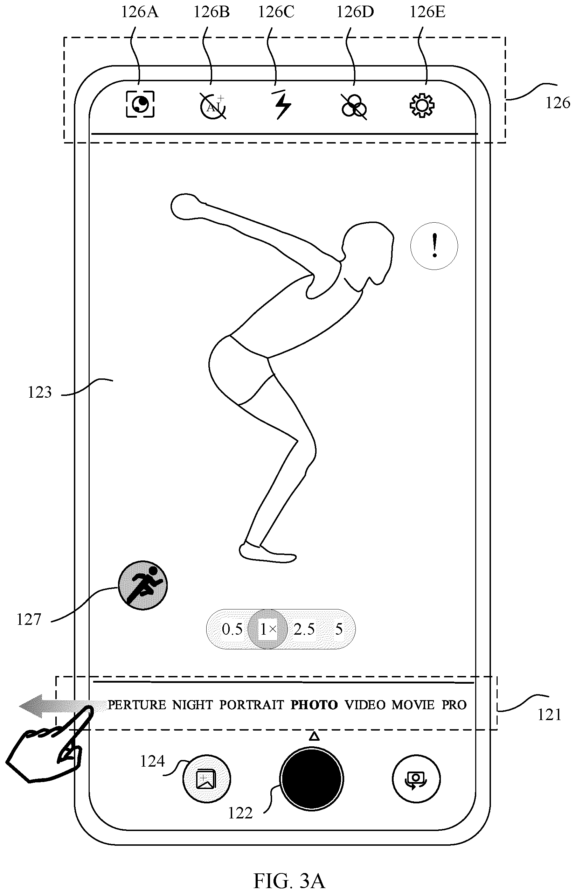

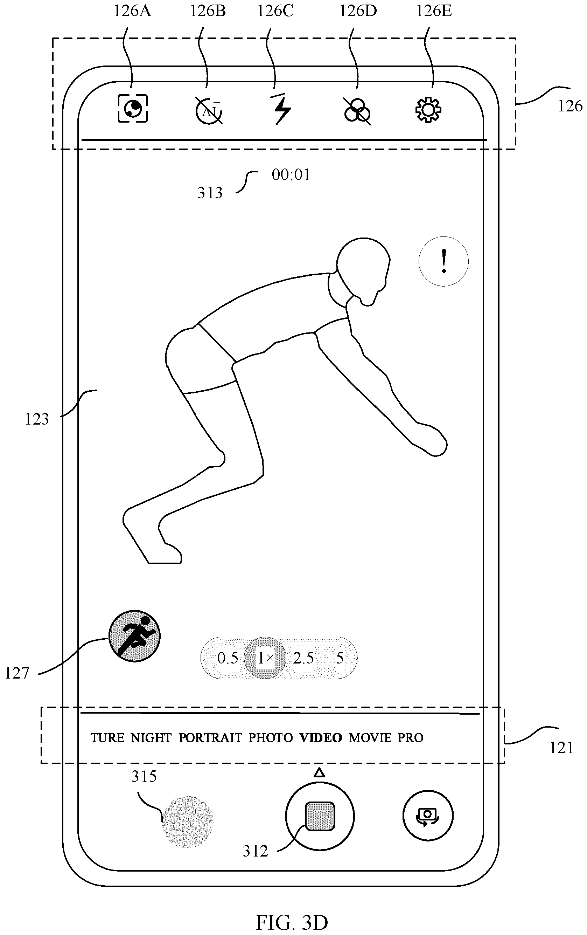

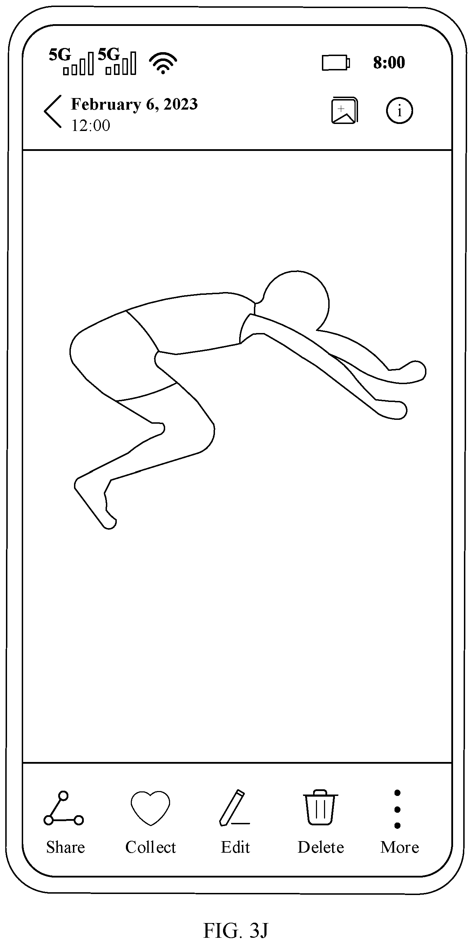

FIG. 3A to FIG. 3F are schematic diagrams in which an electronic device manually captures a highlight photo in a "Video" mode.

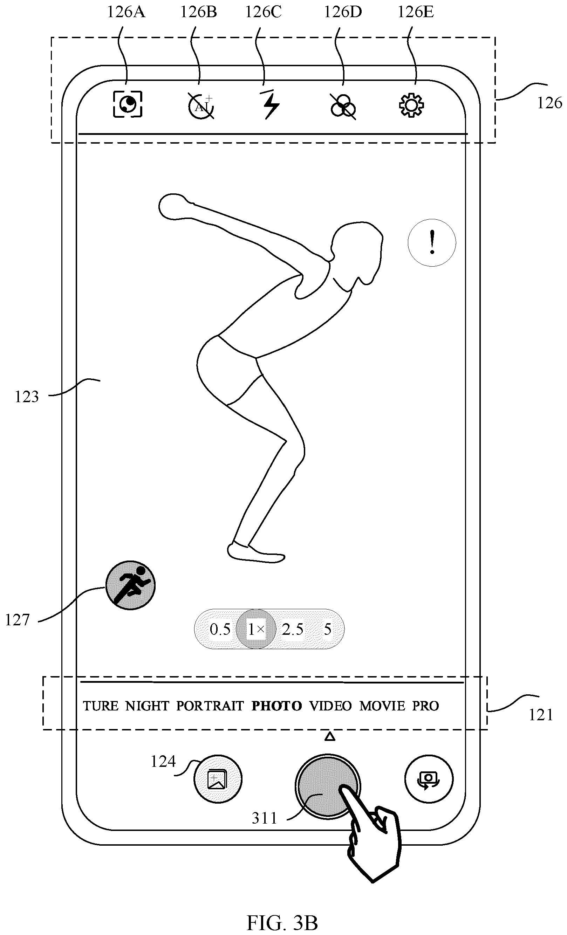

As shown in FIG. 3A, the electronic device may detect a leftward swiping operation performed on the mode bar 121. In response to the operation, the electronic device may switch from the "photo" mode to the "video" mode, as shown in FIG. 3B. As shown in FIG. 3B, in the "video" mode, the electronic device may switch a preview interface corresponding to an original "photo" mode to a preview interface corresponding to an original "video" mode. Specifically, the electronic device may switch the photo option 122 of the original "photo" mode to a video recording start control 311 of the "video" mode.

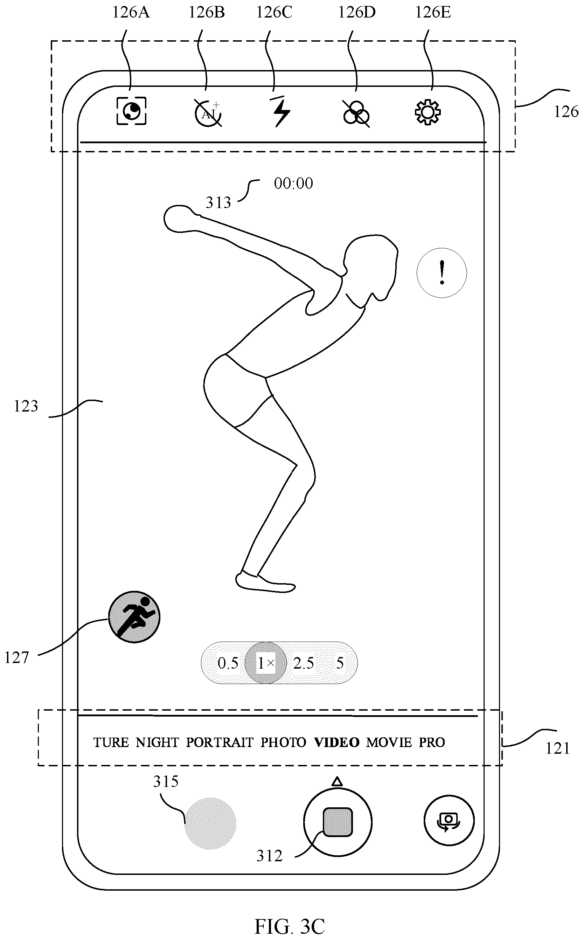

As shown in FIG. 3B, the electronic device may detect a user operation performed on the video recording start control 311. In response to the operation, the electronic device may start video recording. Correspondingly, the electronic device may display a video recording interface shown in FIG. 3C. The electronic device may switch the original video recording start control 311 to a video recording end control 312. In addition, the electronic device may display a time stamp control 313 in the preview box 123, for indicating a recording duration. A video recording interface shown in FIG. 3C may further include a "highlight capture" option 127 and a control 315. The "highlight capture" option 127 may be used for the user to enable/disable the "highlight capture" function. The control 315 may be used for the user to receive a photographing operation during the video recording, to trigger manual capture.

FIG. 3C to FIG. 3G are examples of a group of video recording interfaces displayed by an electronic device during recording of a long jumper. The preview box 123 may sequentially display action states of the athlete photographed by the camera lens at different times during long jumping. The time stamps control 313 may be updated when a recording duration is increased.

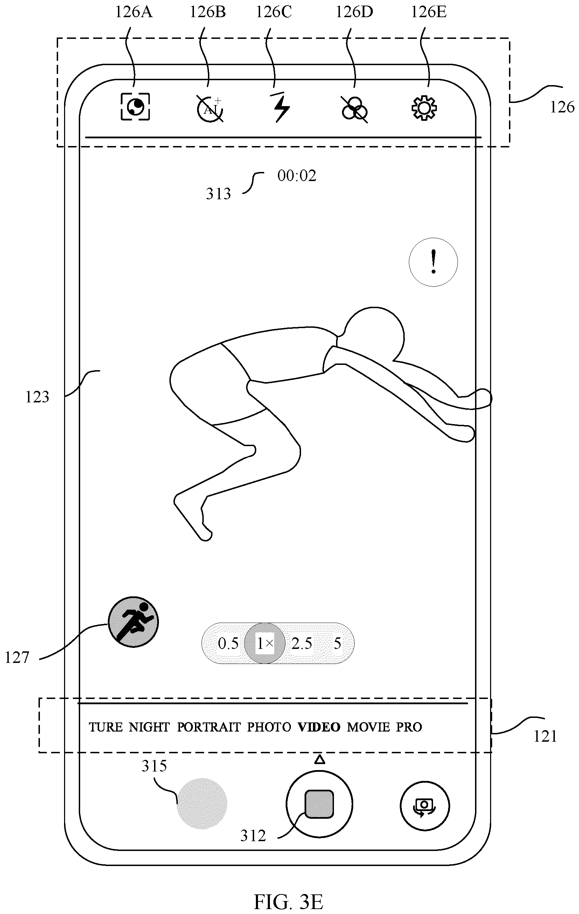

It is assumed that the preview image shown in FIG. 3E, for example, an image that the character jumps up to the highest point, is an image that the user expects to capture. In this case, the user taps the photographing option 315, to capture the image during video recording. Previously, the user enables the "highlight capture" function via the "highlight capture" option 127.

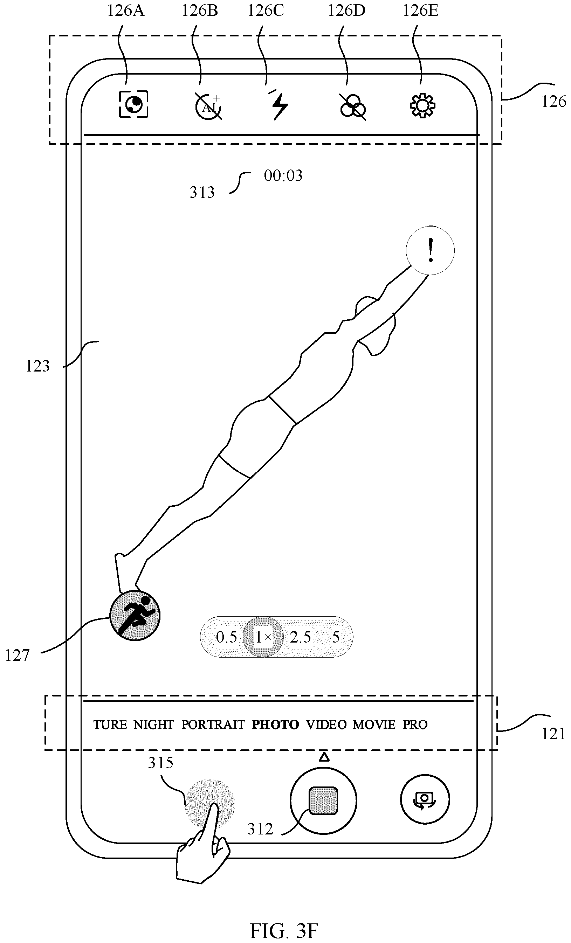

However, due to the reaction time delay of the person, the electronic device detects that a time of the manual capture action is later than a splendid moment at which the user expects to capture. Therefore, the electronic device detects the manual capture action of the user when displaying the preview frame shown in FIG. 3F. However, the image shown in FIG. 3F is not the image that the user expects to capture.

In view of this, the electronic device may further recognize a capturing intention of the user to the image during video recording. In this way, after the manual capture, the electronic device may provide a highlight photo meeting an expectation of highlight capture of the user. For the scheme for manually capturing a highlight photo in the video recording scenario, refer to the scheme for manually capturing a highlight photo in the preview scenario described above. Details are not described herein again.

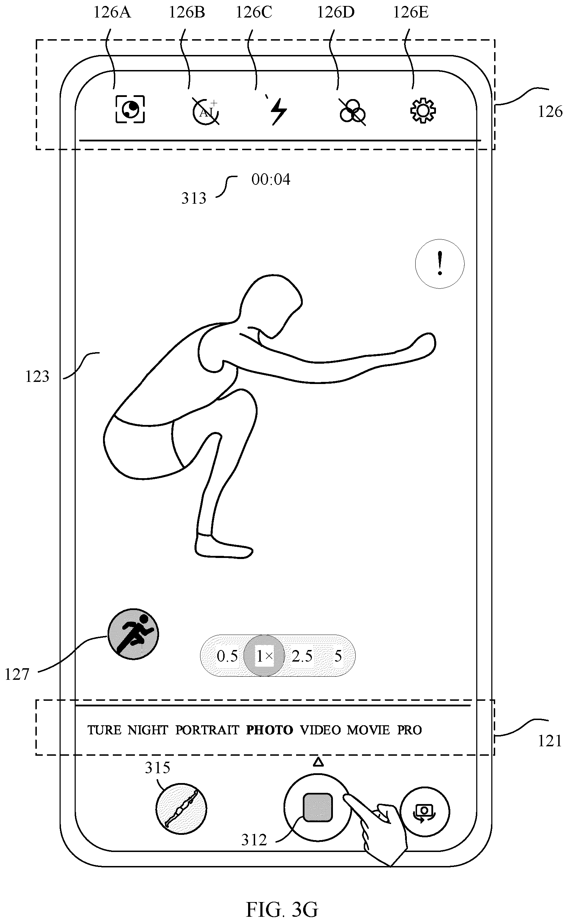

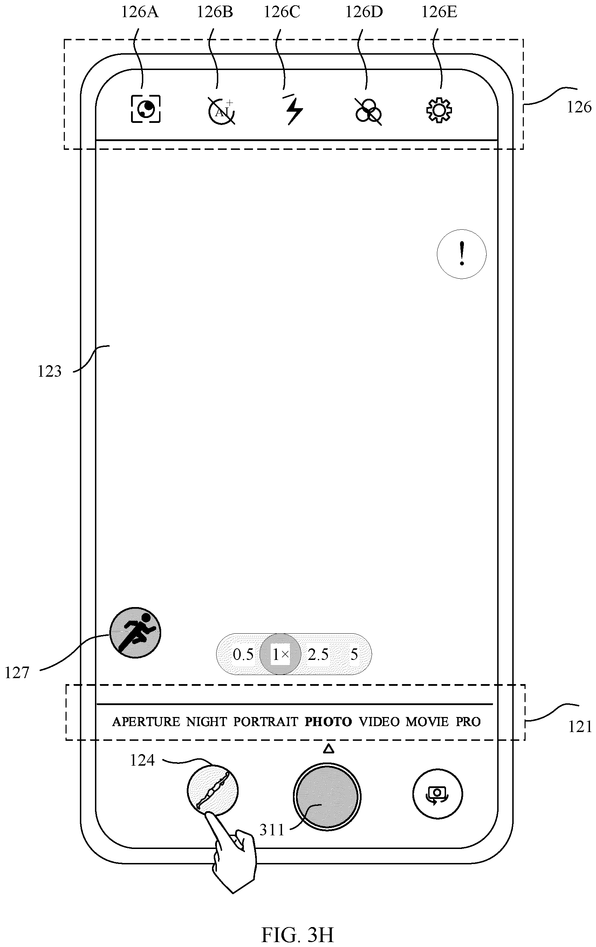

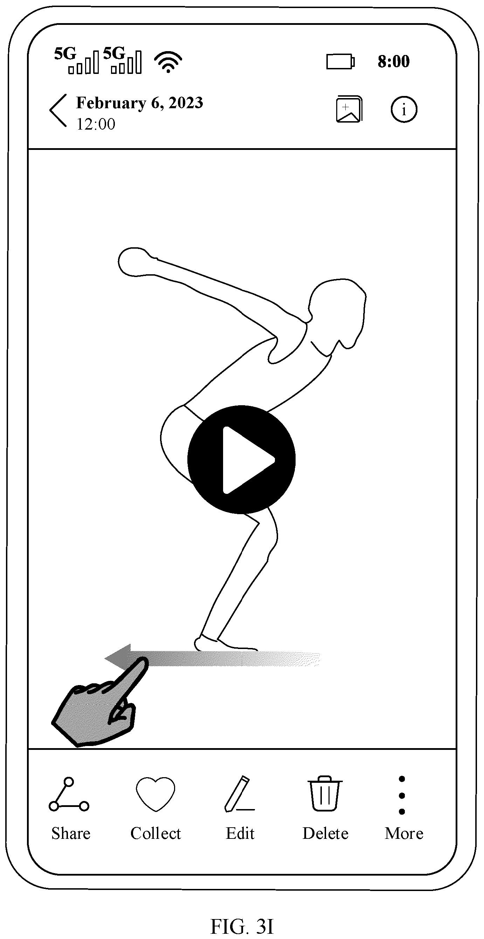

The user may end video recording via the video recording end control 312 in the video recording interface shown in FIG. 3G. After video recording, the electronic device may display the user interface shown in FIG. 3H, that is, existing the video recording interface, and redisplaying the preview interface, including redisplaying the video recording start control 311 replacing the end video recording control 312, and redisplaying the playback control 124 replacing the control 315. The playback control 124 supports the user to view a video that is recorded, and a highlight photo manually captured during video recording. As shown in FIG. 3H, the electronic device may detect an operation that the user taps the playback control 124, and may display the user interface shown in FIG. 3I in response to the operation. A latest recorded video is displayed in the user interface shown in FIG. 3I. After detecting a switch operation for viewing forward in the user interface shown in FIG. 3I, for example, a leftward swiping, the electronic device may switch content displayed in the user interface shown in FIG. 3I from the latest recorded video to a highlight photo manually captured during video recording.

Not limited to viewing the highlight photo via the playback control 124, the user may also first open the user interface of the gallery shown in FIG. 2H, and then may view the highlight photo manually captured during video recording.

**Then, the following describes a form, hardware architecture, and software architecture of the electronic device provided in embodiments of this application.**

The electronic device may be a portable terminal device equipped with iOS^{®}, Android^{®}, Microsoft^{®}, or another operating system, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (AR), a virtual reality (VR) device, an artificial intelligence (artificial intelligence, AI) device, a wearable device, an in-vehicle device, a smart home device, and/or a smart city device.

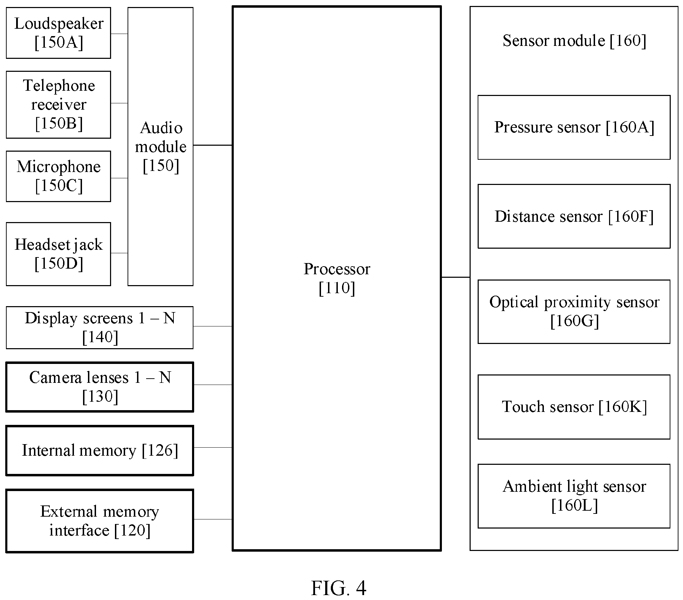

**FIG. 4** **is an example of a hardware structure of an electronic device according to an embodiment of this application.** As shown in FIG. 4, the electronic device 100 may include: a processor 110, an external memory interface 120, an internal memory 126, a camera lens 130, a display screen 140, an audio module 150, a loudspeaker 150A, a telephone receiver 150B, a microphone 150C, a headset jack 150D, and a sensor module 160. The sensor module 160 may include a pressure sensor 160A, a distance sensor 160F, an optical proximity sensor 160G, a touch sensor 160K, an ambient light sensor 160L, and the like.

The processor 110 may include one or more processing units. For example, the processor 110 may include an application processor (Application Processor, AP), a modem processor, a graphics processing unit (Graphics Processing Unit, GPU), an image signal processor (Image Signal Processor, ISP), a controller, a memory, a video encoder and decoder, a digital signal processor (Digital Signal Processor, DSP), a baseband processor, and/or a neural-network processing unit (Neural-network Processing Unit, NPU). Different processing units may be independent devices, or may be integrated into one or more processors.

The controller may be a nerve center and a command center of the electronic device. The controller may generate an operation control signal based on instruction operation code and a timing signal, to complete control of fetching an instruction and executing the instruction.

A memory may also be disposed in the processor 110, and is configured to store instructions and data. In some embodiments, the memory in processor 110 is a cache memory. The memory may store instructions or data that is just used or used cyclically by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

In this embodiment of this application, the processor 110 may be configured to run the camera application. The processor 110 is used to control various modules in the camera application to perform the highlight capture function described in embodiments of FIG. 1A to FIG. 1C, FIG. 2A to FIG. 2F, and FIG. 3A to FIG. 3J, and implement the method flow of capturing the highlight frame via the manually triggering operation, to implement the photographing method provided in this application.

It may be understood that the interface connection relationship between the modules illustrated in this embodiment of this application is merely an example for description, and does not constitute a limitation on the structure of the electronic device. In some other embodiments of this application, the electronic device may alternatively use an interface connection manner different from that in the foregoing embodiments, or use a combination of a plurality of interface connection manners. The internal memory 126 may include one or more random access memories (random access memories, RAMs) and one or more non-volatile memories (non-volatile memories, NVMs).

The random access memories may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM, generally referred to as DDR5 SDRAM), and the like.

The non-volatile memories may include a magnetic disk storage device and a flash memory (flash memory).

The flash memory may be divided into NOR FLASH, NAND FLASH, 3D NAND FLASH, and the like according to an operation principle, or may be divided into a single-level cell (single-level cell, SLC), a multi-level cell (multi-level cell, MLC), a triple-level cell (triple-level cell, TLC), a quad-level cell (quad-level cell, QLC), and the like according to an electrical potential level of a storage unit, or may be divided into a universal flash storage (universal flash storage, UFS), an embedded multimedia card, (embedded multi media Card, eMMC), and the like according to a storage specification.

The random access memory may be directly read and written by the processor 110, may be configured to store an executable program (for example, machine instructions) of an operating system or another running program, or may be configured to store data of a user and an application. The non-volatile memory may also store the executable program, the data of the user and the application, and the like, and may be loaded in advance into the random access memory in advance for the processor 110 to perform direct reading and writing.

The external memory interface 120 may be configured to connect to an external non-volatile memory, to expand a storage capability of the electronic device. The external nonvolatile memory communicates with the processor 110 through the external memory interface 120, to implement a data storage function, for example, storing a file such as music or a video in the external non-volatile memory.

In this embodiment of this application, a computer program code corresponding to highlight capture may be stored in the NVM. After the highlight capture function is enabled, the corresponding program code may be loaded into the RAM. The processor 110 may directly read the program code in the RAM, to implement the highlight capture function. In addition, the highlight frame (also referred to as a highlight image) obtained using the highlight capture function and a corresponding image file such as a thumbnail may be written to the NVM for storage, for viewing by the user.

The electronic device implements a display function by using a GPU, the display screen 140, an application processor, and the like. The GPU is a microprocessor for image processing and connects the display screen 140 to the application processor. The GPU is configured to perform mathematical and geometric computing for graphics rendering. The processor 110 may include one or more GPUs that perform program instructions to generate or change display information.

The display screen 140 is configured to display an image, a video, etc. The display screen 140 may include a display panel. A liquid crystal display (liquid crystal display, LCD) may be used as the display panel. The display panel may alternatively be manufactured by using an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini LED, a micro LED, a micro-OLED, a quantum dot light emitting diode (quantum dot light emitting diode, QLED), or the like. In some embodiments, the electronic device may include 1 or N display screens 140. N is a positive integer greater than 1.

The electronic device may implement a photographing function through the ISP, the camera lens 130, the video encoder and decoder, the GPU, the display screen 140, the application processor, and the like.

The ISP is configured to handle data fed back by the camera lens 130. For example, during photographing, a shutter is pressed, and light is transmitted to a photosensitive element of the camera through a lens. An optical signal is converted into an electrical signal. The photosensitive element of the camera lens transmits the electrical signal to the ISP for processing, so that the ISP converts the electrical signal into an image visible to naked eyes. The ISP may further perform algorithm optimization on noise and brightness of the image. The ISP may further optimize parameters such as exposure and a color temperature of a shooting scenario. In some embodiments, the ISP may be provided in the camera lens 130.

The camera lens 130 is configured to capture a still image or video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include one or N camera lenses 130. N is a positive integer greater than 1.

In this embodiment of this application, the camera lens 130 may include: a telephoto camera lens, a main camera lens, or a wide-angle camera lens.

The digital signal processor is configured to process a digital signal, and may further process another digital signal in addition to the digital image signal. For example, when the electronic device performs a frequency selection, the digital signal processor is configured to perform Fourier transform or the like on frequency energy.

The video encoder and decoder are configured to compress or decompress a digital video. The electronic device may support one or more video encoders and decoders. Therefore, the electronic device may play or record videos in a plurality of encoding formats, such as moving picture experts group (moving picture experts group, MPEG)1, MPEG2, MPEG3, and MPEG4.

The NPU is a neural-network (neural-network, NN) computing processor that quickly processes input information by referring to a biological neural network structure, for example, by referring to a transmission mode between human brain neurons, and may further perform self-learning continuously. By using the NPU, intelligent cognition and another application of the electronic device, such as image recognition, facial recognition, voice recognition, and text understanding, can be implemented. Image recognition includes, for example, recognizing a person, an animal, an action, and the like, and is used to determine whether conditions for an automatic capture scenario are met.

The electronic device may implement an audio function through the audio module 150, the loudspeaker 150A, the telephone receiver 150B, the microphone 150C, the headset jack 150D, the application processor, and the like. For example, music playing and sound recording are implemented.

The audio module 150 is configured to convert digital audio information into an analog audio signal output, and also configured to convert an analog audio input into a digital audio signal. The audio module 150 may be further configured to encode and decode the audio signal. In some embodiments, the audio module 150 may be arranged in the processor 110, or some function modules of the audio module 150 are arranged in the processor 110.

The loudspeaker 150A, also referred to as "horn", is configured to convert an electrical audio signal into a sound signal. The electronic device can allow listening to music or answering a hands-free call through the loudspeaker 150A.

The telephone receiver 150B, also referred to as "earpiece", is configured to convert an electrical audio signal into a sound signal. When a call is answered or a voice message is listened to by using the electronic device, the telephone receiver 150B may be put close to a human ear to listen to a voice.

The microphone 150C, also referred to as a "voice tube" or "mike", is configured to convert a sound signal into an electrical signal. When making a call or sending a voice message, a user may make a sound by approaching the mouth to the microphone 150C, to input a sound signal to the microphone 150C. At least one microphone 150C may be disposed on the electronic device. In other embodiments, the electronic device may be provided with two microphones 150C, to implement a noise reduction function in addition to collecting sound signals. In other embodiments, the electronic device may alternatively be provided with three, four, or more microphones 150C to collect the sound signals, reduce noise, identify sound sources to implement a directional recording function, and the like.

The headset jack 150D is configured to connect a wired headset. The headset jack 150D may be a USB interface, or may be a 3.5 mm open mobile terminal platform (open mobile terminal platform, OMTP) standard interface or a cellular telecommunications industry association of the USA (cellular telecommunications industry association of the USA, CTIA) standard interface.

The structure shown in this embodiment of this application does not constitute a specific limitation on the electronic device. In some other embodiments of this application, the electronic device may include more or fewer assemblies than those shown in the figures, combine some assemblies, split some assemblies, or differently arrange assemblies. The components shown in the figures may be implemented as hardware, software, or their combination. For example, the electronic device may further include a button, a motor, an indicator, and a subscriber identification module (subscriber identification module, SIM) card interface, and the like. For another example, the sensor module may further include: a gyro sensor, a barometric pressure sensor, a magnetic sensor, an acceleration sensor, a fingerprint sensor, a temperature sensor, a bone conduction sensor, and the like.

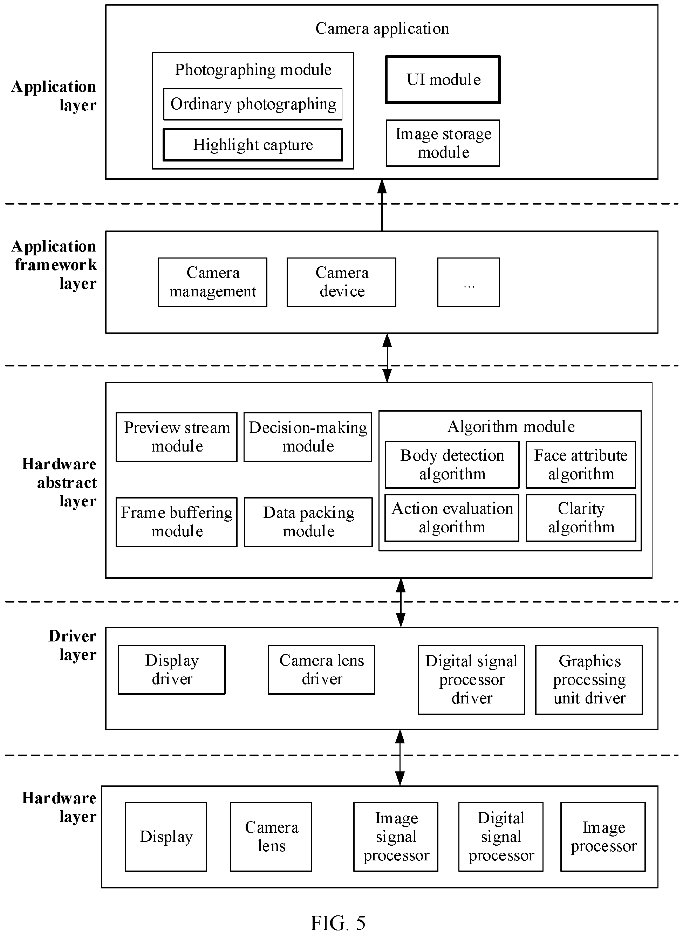

**FIG. 5** **is an example of a software architecture of an electronic device according to an embodiment** of this **application.** As shown in FIG. 5, a layered architecture divides a system into several layers, and each layer has a clear function and task. The layers communicate with each other through software interfaces. In some embodiments, the system is divided into five layers: an application layer, an application framework (framework) layer, a hardware abstract layer (hardware abstract layer, HAL), a drive layer, and a hardware layer from top to bottom.

An application (application) layer may include a series of application packages. For example, an application package may include applications such as a camera application and a gallery not shown. The camera application may include, but is not limited to: a UI module, a photographing module, an image storage module, and the like. The UI module may be a cameraUI module of a camera in other embodiments of this specification, and may be mainly responsible for a human-computer interaction of the camera application, for example, controlling the preview interface, displaying the preview image in the preview interface, and responding to a user operation performed in the preview interface. The photographing module may include: an ordinary photographing module and a highlight capture module, and may be configured to provide an ordinary photographing function, a highlight capture function, and the like. Compared to the ordinary photographing function, the highlight capture function may recognize a capturing intention of the user in advance, may more quickly output highlight capture feedback to the user on the interface, and may support the provision of the highlight photo that meets an expectation of the user. For implementation of highlight capture, refer to other embodiments in this specification. Details are not described herein again. The image storage module may be configured to store the highlight photo manually captured by the user in a file system of the electronic device or in a specific database, for invoked by applications such as the gallery.

The application framework (framework) layer may mainly relate to a camera framework, and may include: a camera access interface for camera management and a camera device, as a connecting link between the preceding and the following. The application framework layer may interact with the camera application via an application program interface (application program interface, API), and may interact with the HAL via an HAL interface definition language (HAL interface definition language, HIDL).

The hardware abstract layer (HAL) is an interface layer located between the application framework layer and the driver layer, and provides a virtual hardware platform for an operating system. The HAL may include modules such as a preview stream module, a frame buffering module, a decision-making module, a data packing module, and an algorithm module. For implementation of the modules, refer to other embodiments in this specification. Details are not herein again.

The driver layer is a layer between hardware and software. The driver layer includes various hardware drivers. The driver layer may include a camera lens driver, a digital signal processor driver, and a graphics processing unit driver. The camera lens driver is configured to drive an image sensor of one or more camera lenses in the camera lens module to capture an image, and drive an image signal processor to pre-process the image. The digital signal processor driver is configured to drive a digital signal processor to process the image. The graphics processing unit driver is configured to drive a graphics processing unit to process the image.

The hardware layer may include a camera lens module, an image signal processor, a digital signal processor, and an image processor. The camera lens module may include an image sensor of one or more camera lenses (for example, an image sensor 1, an image sensor 2, and the like). Optionally, the camera lens module may further include a time of flight (time of flight, TOF) sensor, a multispectral sensor, and the like.

In addition, the algorithm module in this embodiment of this application may be coupled with a library of camera algorithms, and the library of camera algorithms may include image evaluation algorithms in other parts of this specification. The image evaluation algorithm includes, but is not limited to: a body detection algorithm, a face attribute algorithm, an action evaluation algorithm, a face evaluation algorithm, and a clarity algorithm.

The body detection algorithm may be used to detect a specific photographed object in an image, for example, a person, a cat, a dog, and the like, and may further be used to acquire localizations of the objects, such as a human face, a cat face, a dog face. After detecting the specific photographed object, the algorithm module may mark a size and position of the object in the image, and may evaluate the image based on the size and position of the image. For example, when the object occupies a larger and center position, a score for the object in the image is higher.

The face attribute algorithm may be used to recognize face information in the image, for example, whether a person opens eyes or smiles, and the like, further determine face performance based on the face information, and output a face performance score that reflects the face performance in the image. For example, when a face performance score corresponding to opening the eyes is higher, a face performance score corresponding to smiling is higher.

The action evaluation algorithm may be used to recognize an action of the photographed object, for example, jumping, looking back, throwing, playing a ball, running, splashing, throwing a frisbee, and the like, determine a degree of completion of an action in a current image based on an optimal completion point of each type of behavior, and output an action score of the image. When the degree of completion of the action is higher, a corresponding action score is higher. For example, jumping is used as an example. An action state that an object reaches a highest point after leaving the ground may be referred to as an optimal completion point of jumping. When the object in an i^{th} frame of image is in an action state of leaving the ground and reaching the highest point, the action evaluation algorithm may output an action score of the image of 1 (that is, the highest score). When the object in the image does not leave the ground, or leaves the ground but does not reach the highest point, the action evaluation algorithm may output the action score of the image of 0.3, 0.5, or another score less than 1. Specifically, the action evaluation algorithm may determine, based on a distance from the highest point, action scores of different moments at which the object leaves the ground but does not reach the highest point. The optimal completion point of the action needs to be determined based on a running track of the photographed objected within a period of time. Therefore, the action evaluation algorithm may first determine an optimal completion point in a plurality of frames of images after receiving the plurality of frames of images within the period of time, may evaluate a motion state of each frame of image in the plurality of frames of images based on the optimal completion point, and may output an action score of each frame of image.

The clarity algorithm may be used to detect clarity of the image. Clarity of an image without jitters and noise is higher.

The algorithm module may determine an image evaluation of each frame of image by integrating results obtained using the algorithms. Specifically, the algorithm module may set, based on a type of the photographed object in the image, a method for calculating different image evaluations. For example, when the body detection algorithm recognizes that the image includes a person, the decision-making module may determine the image evaluation of the image based on all output results of the body detection algorithm, the action evaluation algorithm, the face attribute algorithm, the clarity algorithm, and photographing parameters reported by the camera lens and/or other sensors. When the body detection algorithm recognizes that the image does not include a person, for example, when the photographed object is a cat or a dog, the output result of the face attribute algorithm is null accordingly. In this case, the decision-making module may determine the image evaluation of the image only based on the output results of the body detection algorithm, the action evaluation algorithm, the clarity algorithm, and the photographing parameters reported by the camera lens and/or other sensors, thereby avoiding reducing the image evaluation of the image due to null values of the face detection algorithm and the face attribute algorithm. In addition, when no specific object is recognized, the output results of the body detection algorithm, the action evaluation algorithm, and the face attribute algorithm are all null values. In this case, the decision-making module may determine the image evaluation of the frame of image only based on clarity output by the clarity algorithm and data reported by the camera lens and/or other sensors.

Based on the hardware architecture and software architecture of the electronic device, the following describes, via the architecture, the photographing method provided in embodiments of this application.

**FIG. 6A to FIG. 6D** **are a schematic diagram of a photographing method according to an embodiment of this application.** The method may be implemented based on interaction and cooperation among an application (for example, a camera application) layer, a framework (framework) layer, and a hardware abstract layer (hardware abstract layer, HAL) in the electronic device. The application layer mainly relates to a CameraUI module, a highlight capture module, and an image storage module in the camera application. The hardware abstract layer mainly relates to modules such as a preview stream module, a frame buffering module, a decision-making module, a data packing module, and an algorithm module. The framework layer mainly relates to a camera framework, and may include: a camera access interface for camera management and a camera device, as a connecting link between the preceding and the following. The application framework layer may interact with the camera application via an API, and may interact with an HAL via an HIDL. As shown in FIG. 6A to FIG. 6D, the method may include the following steps.

### Enabling a camera application

S11: A home screen of a system may detect an operation that a user enables a camera application. For example, the user taps a home screen icon of "Camera".

S12: In response to the operation that the user opens the camera application, the system may enable a CameraUI module and display a preview interface. The preview interface may include the preview box 123 and the "highlight capture" icon 127 as shown in FIG. 1B. The CameraUI module may be responsible for a human-computer interaction of the camera application, for example, controlling the preview interface, displaying an interface element in the preview interface, and responding to a user operation performed in the preview interface.

S13: The CameraUI module further sends a trigger message to a camera framework, where the trigger message may carry parameters such as a heavy algorithm, a first zoom range, and the like, to trigger an HAL to enable camera stream configuration.

S14: The camera framework further transmits a message of enabling stream configuration to the HAL, specifically, transmits the message to a preview stream module in the HAL.

Stream configuration herein may include initializing heavy algorithm, and configuring the first zoom range supported by the preview stream.

The heavy algorithm, that is, an algorithm supported by the preview stream, may include an artificial intelligence recognition algorithm, a high dynamic range (high dynamic range, HDR) algorithm, and the like. After receiving the preview stream, the CameraUI may display a function option corresponding to the algorithm in the preview box, for example, the HDR function option 126A and the AI function option 126B shown in FIG. 1B.

This meets various image processing requirements of the user. In this case, a "highlight capture" function is not enabled. The camera application only enables an ordinary photographing function, and a loaded algorithm is more complex than an algorithm loaded after the "highlight capture" function is enabled. Therefore, the algorithm in this case may be referred to as a "heavy algorithm", and the later algorithm may be referred to as a "light algorithm".

The zoom range supported by the preview stream may be adapted to the supported algorithms, to obtain optimal algorithm execution effect. For example, compared to ordinary photographing, "highlight capture" is intended to obtain a highlight frame by means of image evaluation, and the perception algorithm used by "highlight capture" needs to perform frame filtering based on more image details and higher image quality. Therefore, a higher zoom ratio with a significant loss of pixels may not be supported. This can also be learned from a comparison between the user interfaces shown in FIG. 1B and FIG. 1C. As shown in FIG. 1B, during ordinary photographing, the zoom range supported by the preview stream is from 0.5x to 10x. As shown in FIG. 1C, during "highlight capture", the zoom range supported by the preview stream is from 0.5x to 5x. Compared to 5x, 10x may result in more loss of image details, which is not suitable for the algorithm used in "highlight capture".

S15: After receiving a trigger message of enabling stream configuration, the HAL may send an instruction to the camera device ("Sensor" shown in the figure), to enable the camera to start capturing an image.

S16: After enabling the camera, the HAL may receive an image stream from the camera, where the image stream may be referred to as an original image stream in this case.

S17: The HAL may process and compress the original image stream from the camera, to obtain a preview stream. In addition, the HAL may initialize the heavy algorithm, and configure the first zoom range supported by the preview stream.

S18: The HAL may return the preview stream to the camera framework. In this case, a zoom range configured for the preview stream is the first zoom range.

S19: After receiving the preview stream from the HAL, the camera framework may transmit the preview stream to the CameraUI in the camera application, to trigger the CameraUI to display a preview image in the preview box.

S20: CameraUI in the camera application displays the preview image in the preview interface using the preview stream. The preview image in the preview box may be continuously refreshed with the preview stream.

At this point, in response to the operation that the user enables the "Camera", the electronic device completes the display of the preview interface and the preview image in the preview interface.

S21: In response to the operation that the user enables the camera application, the CameraUI module may further enable the image storage module in the camera application. The image storage module may be used to store an image manually captured or automatically captured by the user to a file system or a specific database of the electronic device, for other applications such as a gallery to invoke the image.

The following describes what the electronic device performs after the "highlight capture" function is enabled, that is, how the application layer, the framework layer, the HAL, and the camera device in the electronic device work together to implement the "highlight capture" function.

### Enabling "highlight capture"

S22: The CameraUI module in the camera application may detect the operation that the user enables the "highlight capture" function. For example, the user taps the "highlight capture" icon in the preview interface.

S23: In response to the operation of enabling the "highlight capture" function, the CameraUI module may enable a "highlight capture" module of the camera application.

S24: The enabled "highlight capture" module may send a trigger message to the camera framework, to trigger the HAL to enable the camera stream configuration again.

S25: The camera framework further transmits a message of enabling stream configuration to the HAL, specifically, transmits the message to a preview stream module in the HAL.

Stream reconfiguration may include initializing light algorithm, and configuring a second zoom range supported by the preview stream. This is described in details in step S28.

S26: After receiving a trigger message of enabling stream reconfiguration, the HAL may send an instruction to the camera device, to enable the camera to start capturing an image.

S27: The HAL may continuously receive the image stream from the camera. In this case, the image stream may be referred to as the original image stream.

S28: The HAL may process and compress the original image stream from the camera, to obtain the preview stream. In addition, the HAL may initialize the light algorithm, and configure the second zoom range supported by the preview stream.

The light algorithm is mainly a perception algorithm in this specification, and may include a body detection algorithm, an action evaluation algorithm, a face detection algorithm, a face attribute algorithm, and a clarity algorithm. The body detection algorithm, the action evaluation algorithm, the face detection algorithm, and the face attribute algorithm may be used to acquire image content, and the clarity algorithm may be used to acquire clarity of the image. Indicators for evaluating image quality may include other parameters such as exposure in addition to clarity. The parameters may be directly acquired from the data reported by the camera lens and/or other sensors.

A maximum zoom ratio included in the second zoom range may be lower than a maximum zoom ratio included in the first zoom range, to enable a preview frame in a preview stream under "highlight capture" to have more image details, to perform image evaluation using a perception algorithm of "highlight capture".

For descriptions of initializing the algorithm and configuring a zoom range supported by the preview stream, refer to step S17. Details are not described herein again.

S29: The HAL may return the preview stream to the camera framework. In this case, based on the preview stream, the light algorithm is initialized, and the zoom range is configured as the second zoom range. To distinguish the preview stream returned to the camera framework in step S18, the preview stream returned in this step may be referred to as a new preview stream.

S30: After receiving the new preview stream from the HAL, the camera framework may transmit the new preview stream to the CameraUI in the camera application, to trigger the CameraUI to refresh the preview image in the preview box.

After receiving the preview stream, the CameraUI may understand that an algorithm corresponding to the preview stream is the light algorithm rather than the heavy algorithm, thereby disabling a function option corresponding to the heavy algorithm in the preview box, for example, disabling the HDR function option 126A and the AI function option 126B shown in FIG. 1B, as shown in FIG. 2C. The user may perceive that, after the "highlight capture" icon 122 in the preview interface is tapped, the HDR function option 126A and the AI function option 126B in the preview box become untouchable, for example, being grayed.

S31: The CameraUI in the camera application may also refresh the preview image with the new preview stream.

At this point, in response to the operation that the user enables "highlight capture", the electronic device completes related updates in the preview interface, and the updates may be perceived by the user.

In addition, in response to the operation that the user enables "highlight capture", the electronic device may further perform step S33 to step S39, to recognize the capturing intention of the user in advance, to support a subsequent quick capturing feedback, and support the provision of highlight photo that meets the capturing expectation of the user.

S32: After receiving, from the "highlight capture" module, a trigger message of enabling stream reconfiguration, the camera framework may further send an enabling message to the algorithm module in the HAL, to enable the algorithm module.

S33: The enabled algorithm module may obtain the preview stream from the preview stream module. The preview stream module may be coupled to a buffered region for storing the preview stream, and may read the preview stream buffered in the buffered region.

S34: The algorithm module may perform the perception algorithm, to perform image evaluation on the preview frame in the preview stream.

S35: After performing image evaluation, the algorithm module may feed frame information to the frame buffering module. The frame information may include a frame number, a time stamp, an evaluation result, and the like.

S36: The frame buffering module may receive the preview frame in the preview stream transmitted by the preview stream module.

S37: The frame buffering module may buffer the preview frames in the preview stream and frame information of preview frames fed back by the buffering module.

S38: The decision-making module may access the preview frame and the frame information buffered by the buffering module, to select an optimal frame every period of time, for example, select the optimal frame every 0.33 seconds. The optimal frame may be a preview frame that is obtained within 0.33 seconds using the perception algorithm and that has a highest image evaluation or a preview frame with an image evaluation higher than a specific reference value (which may be referred to as a first reference value). 0.33 seconds is only an example, and selected from optimal recognition intervals of the user. 0.33 seconds may include a plurality of frames, such as 15 frames, which is determined based on a frame rate.

S39: The decision-making module may buffer, in a queued manner, an optimal frame that is selected in each period of time and that has a high evaluation result.

Buffering in a queued manner means that the optimal frames are stored one by one in a first-in first-out manner, and one or some optimal frames that may not be selected within 0.33 seconds are stored. That is, the image frame within 0.33 seconds may not obtain a high evaluation using the perception algorithm, and an evaluation is lower than a specific threshold. **In** this case, no optimal frame is stored in a queue within 0.33 seconds. Alternatively, a preview frame with an optimal evaluation result in 0.33 seconds may be recorded as the optimal frame in 0.33 seconds. Therefore, an optimal frame may be evaluated in each 0.33 seconds.

Because the evaluation result of the perception algorithm is high, the optimal frames that are stored in the queue may be the image that the user expects to capture. Once detecting a capturing action of the user, the electronic device may quickly provide feedback to the user based on the optimal frame that is stored in the queue in advance, for example, updating the thumbnail in the preview interface. This resolves a problem that it is difficult to capture the highlight photo that meets the expectation due to a reaction time delay of a person.

Herein, "in advance" may mean to recognize based on a frame evaluation range of each preview frame after "highlight capture" is enabled, even if a manual capture action is not detected. **In** this way,
each optimal frame in the queue carries a time stamp, and the time stamps may be generated by the camera device. The decision-making module may understand a photographing time of each optimal frame in the queue via the time stamps. Therefore, during manual capture, the decision-making module may decide, based on a time of manual capture, which optimal frame is a highlight frame.

Step S33 to step S39 may be performed all the time when "highlight capture" is enabled. As time passes, a local optimal frame in the queue may be updated all the time, even if the manual capture action is not detected. In this way, some optimal frames that meet the expectation of the user may be recognized "in advance", to recognize the capturing intention of the user in advance, thereby supporting the subsequent quick decision-making for the manually-captured highlight frame. Optionally, step S38 and step S39 may also be performed after manual capture is triggered.

### Manual highlight capture

S40: The CameraUI module in the camera application detects a photographing operation of the user, for example, an operation that the user presses a "shutter" button in the preview interface. The user taps "shutter" to trigger photographing, which is referred to as manual capture.

S41: In response to manual capture, the CameraUI module may transmit a photographing request to the highlight capture module in the camera application. The request may carry a time stamp of manual capture.

Frame alignment may be performed based on the time of manual capture. For example, in a duration of a preview frame in which manual capture is performed, a time indicated by a time stamp of the preview frame is the time of manual capture. This facilitates subsequent measurement of a time interval between manual capture and a buffered frame (buffered by the frame buffering module).

S42: The highlight capture module may send a photographing request to the camera framework. The request also carries the time stamps of manual capture.

S43: The camera framework may send the photographing request to the decision-making module in the HAL, to trigger manual capture. The request may carry the time stamps of manual capture. S44: After receiving the photographing request, the decision-making module may obtain a thumbnail A of the preview frame corresponding to the time stamps based on the time stamps in the request, that is, a manually-captured thumbnail.

The preview frame corresponding to the time stamps is the preview frame displayed in the preview box when the user enables the "shutter".

S45: The decision-making module may return the thumbnail A to the camera framework.

S46: The camera framework sends the thumbnail A to the CameraUI module.

S47: After receiving the thumbnail A, the CameraUI module may display the thumbnail A. For example, in the preview interface shown in FIG. 2E, a thumbnail displayed on the playback control 124 is updated into the thumbnail A.

At this point, the electronic device provides quick feedback about manual capture of the user by using a first highlight frame buffered before manual capture, that is, refreshing a new thumbnail, and displaying the thumbnail A.

In addition, the electronic device further performs step S50 to step S57, to decide a highlight frame for generating a full-size image, to enable the user to obtain the highlight photo that meets an expectation.

S50: After receiving the photographing request, the decision-making module may decide the manually-captured highlight frame from optimal frames within a period of time before manual capture and optimal frames within a period of time after manual capture. The manually-captured highlight frame is finally stored as a highlight photo provided to the user.

For example, the decision-making module may compare optimal frames within 1 second before manual capture and optimal frames within 0.5 seconds after manual capture, specifically, may select an optimal frame A from the optimal frames within 1 second before manual capture, select an optimal frame B from the optimal frames within 0.5 seconds after the manual capture, compare the optimal frame A to the optimal frame B, and select a better one from the optimal frame A and the optimal frame B as the manually-captured highlight frame. The manually-captured highlight frame may be a local optimal frame with a highest image evaluation within 1 second before manual capture and within 0.5 seconds after manual capture or a local optimal frame with an image evaluation higher than a specific reference value (a second reference value).

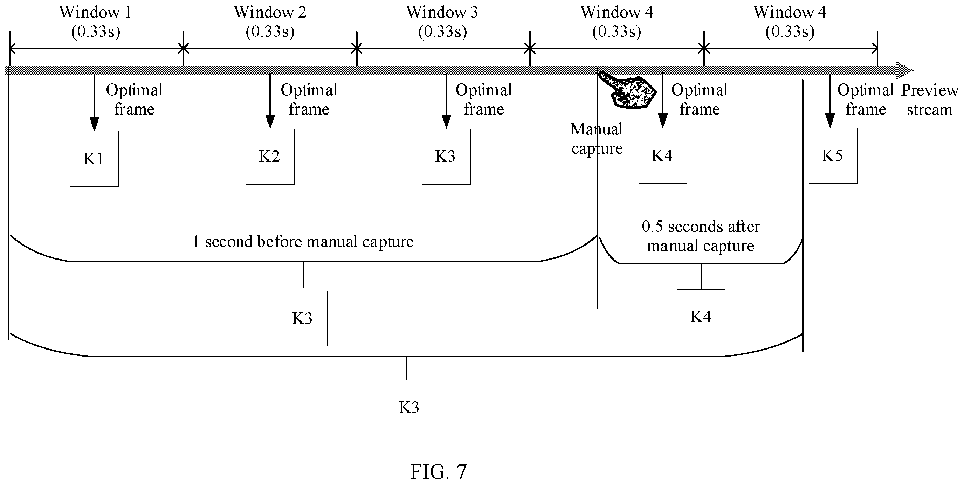

Assuming that as shown in FIG. 7, there are optimal frames K1, K2, and K3 within 1 second before manual capture and an optimal frame K4 within 0.5 seconds after manual capture which are obtained by evaluating the optimal frame every 0.33 seconds after highlight capture is enabled, and an image evaluation of K3 among K1, K2, and K3 is highest and higher than an image evaluation of K4, K4 is decided as the highlight frame within 0.5 seconds after manual capture, and K3 is decided, from the optimal frames K1, K2, and K3, as the highlight frame within 1 second before manual capture, and then by comparing K3 to K4, K3 is finally decided as the manually-captured highlight frame, that is, the manually-captured highlight frame.

The manually-captured highlight frame can be decided from optimal frames before and after the time of manual capture, a highlight photo that more meets an expectation of the user can be provided for manual capture of the user, and initiative of manual capture of the user is reflected.

In this specification, 0.5 seconds and 1 second are just examples, and in an actual application, values may be set as required. As mentioned above, the decision-making module selects the optimal frame every 0.33 seconds and stores the optimal frame in a queued manner. Therefore, at most three optimal frames are stored in the queue within 1 second before manual capture. The period of time after manual capture may be set to be shorter than the period of time before manual capture, to decide the manually-captured highlight frame as early as possible after manual capture. S51: After deciding the manually-captured highlight frame, the decision-making module may send the manually-captured highlight frame to a data packing module.

S52: The data packing module packs the manually-captured highlight frame, to generate a full-size image, that is, to obtain the manually-captured highlight photo.

A thumbnail B corresponding to the full-size image may be added during packing. That is, the full-size image of manual capture includes the thumbnail B. A packet obtained after the highlight frame is packed may be an exchangeable image file (exchangeable image file, Exif). The Exif includes, but is not limited to the following information: the highlight frame, the photographing time of the highlight frame, the photographing parameter, and the like.

Optionally, like the frame buffering module, the data packing module may further be coupled to a buffered region in which the optimal frame is stored. In step S49, the decision-making module may further send only a frame number of the manually-captured highlight frame to the data packing module, and the data packing module may, based on the frame number, obtain the manually-captured highlight frame from the buffered region in which the optimal frame is stored, and may pack the manually-captured highlight frame. This can save computer resources.

S53: After generating the full-size image, the data packing module may return the full-size image to the camera framework. The full-size image includes the thumbnail B.

S54: The camera framework may return the full-size image to the image storage module in the camera application. The full-size image includes the thumbnail B.

S55: After receiving the full-size image, the image storage module stores the full-size image, for example, stores the full-size image in a file system or a specific database.

Subsequently, after the user exits the camera application and then enables the camera application again, the user may see that the thumbnail image in the preview interface is updated to the thumbnail image B.

S56: The electronic device exits the camera application and exits displaying of the preview interface. Then, the electronic device enables the camera application again and enables the preview interface again.

S57: The camera application may obtain the thumbnail B from the file system, and may refresh and display the thumbnail B via the CameraUI module.

To be specific, the camera application updates the thumbnail once again after the manually-captured highlight frame is decided. This is equivalent to updating the thumbnail in the preview interface in two steps: The first step is to immediately feed back the thumbnail A based on the preview frame of manual capture; and the second step is to comprehensively decide the highlight frame from the highlight frames obtained within the period of time before manual capture and within the period of time after manual capture, and then feed back the thumbnail B. In this way, for manual capture, timely feedback (the thumbnail A) can be provided in the preview interface, and feedback (the thumbnail B) can be further optimized.

Not limited to exiting the camera and enabling the camera again, the user may further enable the gallery by tapping the home screen icon of the gallery, and view the thumbnail B of the manually-captured highlight frame in the gallery.

At this point, for manual capture, the electronic device completes interface feedback and obtaining of the highlight photo.

Thereafter, the user may enable the "Gallery" to view the highlight photo. For example, the user may tap the thumbnail in the preview interface enabled again, to enter the gallery for viewing the manually-captured highlight photo. Certainly, the user may also enter the gallery from the home screen of the system. The gallery may, from the file system or the specific database, load full-size images that are stored, to show the manually-captured highlight photo for the user.

The term "user interface (user interface, UI)" in this specification, claims, and accompanying drawings of this application is a medium interface for interaction and information exchange between an application or an operating system and a user. The user interface implements conversion between an internal form of information and a form acceptable to the user. A user interface of an application program is source code written in a specific computer language such as Java or extensible markup language (extensible markup language, XML). The interface source code is parsed and rendered on a terminal device, and finally presented as user-recognizable content, for example, a control such as a picture, a text, or a button. A control (control), also referred to as a widget (widget), is a basic element of the user interface. Typical controls include a toolbar (toolbar), a menu bar (menu bar), a text box (text box), a button (button), a scrollbar (scrollbar), a picture, and a text. Attributes and content of controls on a screen are defined by tags or nodes. For example, in XML, controls included in a screen are defined by nodes such as <Textview>, <ImgView>, and <VideoView>. A node is corresponding to a control or attribute in the interface. The node is presented as content visible to a user after being parsed and rendered. In addition, interfaces of many applications, such as a hybrid application (hybrid application) interface, generally include a web page. A web page, also referred to as a page, may be understood as a special control embedded in an application interface. The web page is source code written in specific computer languages such as a hyper text markup language (hyper text markup language, HTML), a cascading style sheet (cascading style sheet, CSS), and a JavaScript (JavaScript, JS). The source code of the web page may be loaded and displayed by a browser or a web page display component with similar functions to the browser as content that can be recognized by the user. Specific content included in the web page is also defined by using a label or a node in the source code of the web page. For example, an element and an attribute of the web page are defined in the HTML by using <p>, <img>, <video>, and <canvas>.

A common representation form of the user interface is a graphic user interface (graphic user interface, GUI), which is a graphically displayed user interface related to a computer operation. The graphical user interface may be an interface element such as an icon, a window, or a control that is displayed on a display of an electronic device. The control may include visible interface elements such as an icon, a button, a menu, a tab, a text box, a dialog box, a status bar, a navigation bar, and a Widget.

It should be understood that the steps of the foregoing method embodiment provided in this application may be implemented by using a hardware integrated logic circuit in the processor or implemented by using instructions in a software form. The steps of the method disclosed with reference to embodiments of this application may be directly implemented by a hardware processor, or may be implemented by a combination of hardware and software modules in a processor.

This application further provides an electronic device, and the electronic device may include a memory and a processor. The memory may be configured to store a computer program, and the processor may be configured to invoke the computer program in the memory to cause the electronic device to perform the method in any one of the foregoing embodiments.

This application further provides a chip system. The chip system includes at least one processor configured to implement the functions involved in the method performed by the electronic device in any one of the foregoing embodiments.

In a possible design, the chip system further includes a memory. The memory is configured to store program instructions and data. The memory is located inside the processor or outside the processor. The chip system may include a chip, or may include a chip and another discrete device.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may also include one or more memories. The memory may be integrated with the processor, or may be separated from the processor. This is not limited in this embodiment of this application. For example, the memory may be a non-transitory memory such as a read only memory ROM, and the memory and the processor may be integrated on a same chip, or may be arranged on different chips respectively. A type of the memory and an arrangement manner of the memory and the processor are not limited in embodiments of this application.

For example, the chip system may be a field programmable gate array (field programmable gate array, FPGA), an application specific integrated circuit (application specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product, and the computer program product includes a computer program (which may also be referred to as code or an instruction). When the computer program is run, a computer is caused to perform the method performed by the electronic device in any one of the foregoing embodiments.

This application further provides a computer-readable storage medium. The computer-readable storage medium stores a computer program (also referred to as code or an instruction). When the computer program is run, a computer is caused to perform the method performed by the electronic device in any one of the foregoing embodiments.

Various implementations of this application may be combined randomly to implement different technical effects.

All or some of the foregoing embodiments may be implemented by software, hardware, firmware, or any combination thereof. When software is used for implementation, implementation may be entirely or partially carried out in the form of a computer program product. The computer program product includes one or more computer instructions. When instructions of the computer program are loaded and executed on a computer, procedures or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, coaxial-cable, optical-fiber, or digital-subscriber-line) or wireless (for example, infrared, radio, or microwave) manner. The computer-readable storage medium may be any available medium that can be accessed by the computer, or a data storage device, such as a server or a data center in which one or more usable mediums are integrated. The available medium may be a magnetic medium (for example, a floppy disk, a hard disk, or a magnetic tape), an optical medium (for example, a DVD), a semiconductor medium (for example, a solid-state drive (Solid State Disk)), or the like.

Those of ordinary skill in the art can understand that all or some flows of the method in the above embodiments may be implemented by using a computer program instructing relevant hardware. This program may be stored in a computer-readable storage medium. When this program is performed, flows of all method embodiments mentioned above may be included. The storage medium includes: any medium that can store program code, such as an ROM, a random access memory RAM, a magnetic disk, and an optical disk.

In conclusion, the descriptions above are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A photographing method, comprising:
displaying, by an electronic device, a photographing preview interface, wherein the photographing preview interface displays an image captured by a camera lens of the electronic device and a first thumbnail;
detecting, by the electronic device, that a shutter button is pressed when detecting a first image frame;
displaying, by the electronic device, a thumbnail of the first image frame in the photographing preview interface;
obtaining, by the electronic device, a second image frame based on an image frame in a first time range, wherein the image frame captured by the camera lens in the first time range comprises the first image frame; and the first image frame is different from the second image frame;
storing, by the electronic device, the second image frame in a gallery;
exiting, by the electronic device, displaying of the photographing preview interface; and
displaying, by the electronic device, the photographing preview interface again, and displaying a thumbnail of the second image frame in the photographing preview interface.

2. The method according to claim 1, further comprising: storing the thumbnail of the second image frame in the gallery.

3. The method according to claim 1 or 2, further comprising:
detecting, by the electronic device in the photographing preview interface, an operation of tapping the thumbnail of the first image frame; and
displaying, by the electronic device, a full-size image display interface of a gallery application, wherein the full-size image display interface displays the second image frame.

4. The method according to any one of claims 1 to 3, wherein the electronic device comprises a hardware abstract layer HAL; and the obtaining, a second image frame based on an image frame in a first time range comprises:
acquiring, by a decision-making module in the HAL, a preview frame in a preview stream and frame information of the preview frame from a frame buffering module in the HAL, wherein the frame information comprises a time stamp and a frame evaluation;
selecting, by the decision-making module, a local optimal frame once in a period of time, and buffering the local optimal frame in a queued manner, wherein the local optimal frame is a preview frame with a highest image evaluation in the period of time or a preview frame with an image evaluation higher than a first reference value; and
selecting, by the decision-making module, the second image frame from a local optimal frame that is buffered in a queued manner and that is in the first time range, wherein the second image frame is a preview frame with a highest image evaluation in the first time range or a preview frame with an image evaluation higher than a second reference value.

5. The method according to claim 4, further comprising:
acquiring, by an algorithm module in the HAL, a preview frame in preview from a preview stream module in the HAL, and performing image evaluation on the preview frame, to obtain a frame evaluation;
returning, by the algorithm module, the frame evaluation of the preview frame to the frame buffering module in the HAL; and
receiving, by the frame buffering module, the preview frame in the preview stream transmitted by the preview stream module, and buffering the preview frame and the frame information of the preview frame.

6. The method according to any one of claims 1 to 5, wherein the electronic device further comprises: a camera framework, a camera application, and the HAL; and the storing, by the electronic device, the second image frame in a gallery comprises:
sending, by the decision-making module, the second image frame to a data packing module in the HAL;
performing, by the data packing module, packing processing on the second image frame, and returning a packed second image frame to the camera framework, wherein the packed second image frame comprises the thumbnail of the second image frame;
returning, by the camera framework, the packed second image frame to an image storage module in the camera application; and
storing, by the image storage module, the packed second image frame.

7. The method according to any one of claims 1 to 6, wherein the electronic device comprises: the camera application, the camera framework, and the HAL; and the displaying, by the electronic device, a thumbnail of the first image frame in the photographing preview interface comprises:
returning, by the decision-making module, the thumbnail of the first image frame to the camera framework;
returning, by the camera framework, the thumbnail of the first image frame to a UI module in the camera application; and
displaying, by the UI module, the thumbnail of the first image frame.

8. The method according to any one of claims 1 to 7, wherein before the detecting, by the electronic device, that a shutter button is pressed when detecting a first image frame, the method further comprises: enabling, by the electronic device, a highlight capture function, wherein the enabling a highlight capture function comprises: reconfiguring a preview stream process, wherein reconfiguring comprises: initializing an algorithm of the preview stream to a heavy algorithm, and configuring a zoom range supported by the preview stream to a second zoom range from a first zoom range, wherein a maximum zoom ratio comprised in the second zoom range is lower than a maximum zoom ratio comprised in the first zoom range.

9. The method according to claim 8, wherein the electronic device comprises the hardware abstract layer HAL, the camera framework, and the camera application; and the reconfiguring a preview stream process comprises:
initializing, by the preview stream module in the HAL, the algorithm of the preview stream to a light algorithm, and changing the zoom range supported by the preview stream to the second zoom range;
returning, by the preview stream module, a reconfigured preview stream to the camera framework;
returning, by the camera framework, the reconfigured preview stream to the UI module in the camera application; and
displaying, by the UI module in the camera application, the reconfigured preview stream in the preview interface, and refreshing the preview interface.

10. The method according to claim 9, wherein the refreshing the preview interface comprises: disabling a function option that is supported by the heavy algorithm but not supported by the light algorithm, and refreshing the zoom range to the second zoom range from the first zoom range.

11. The method according to any one of claims 1 to 10, wherein a second highlight frame stored in the gallery comprises marking information for marking a manually-captured highlight photo.

12. An electronic device, comprising one or more processors and one or more memories, wherein the one or more memories are coupled to the one or more processors, and the one or more memories are configured to store computer program code, the computer program code comprises computer instructions, and when the one or more processors execute the computer instructions, the method according to any one of claims 1 to 11 is performed.

13. A chip system, wherein the chip system is used in an electronic device, the chip system comprises one or more processors, and the processor is configured to invoke computer instructions, to enable the method according to any one of claims 1 to 11 to be performed.

14. A computer-readable storage medium, comprising instructions, wherein when an electronic device runs the instructions, the method according to any one of claims 1 to 11 is performed.
